# EUROPEAN PATENT APPLICATION

(11) **EP 4 797 367 A1**
(43) Date of publication of application: **26.08.2026**
(21) Application number: 26156563.4
(22) Date of filing: 05.02.2026
(51) Int. Cl.: H01M 10/04, H01M 50/533, H01M 50/536, H01M 50/54

(54) **SECONDARY BATTERY AND METHOD OF MANUFACTURING SECONDARY BATTERY**

(30) Priority: 19.02.2025 KR 20250021620
(71) Applicant: SAMSUNG SDI CO., LTD., Yongin-si, Gyeonggi-do 17084 (KR)
(72) Inventor: JOE, Yun Sang, 16678 Suwon-si, Gyeonggi-do (KR)
(74) Representative: Gulde & Partner

(57) **Abstract**

A secondary battery and a method of manufacturing a secondary battery are disclosed. The secondary battery includes: an electrode assembly including a plurality of electrodes that are stacked, the plurality of electrodes each including: a mixture portion having a first width; and an uncoated portion which has a second width equal to the first width and extends from the mixture portion, and a plurality of the uncoated portions are stacked to form an uncoated portion bundle; and a current collecting member which covers at least two surfaces of the uncoated portion bundle and is connected to the uncoated portion bundle.

## Description

### BACKGROUND

### 1. Field

Aspects of embodiments of the present invention relate to a secondary battery and a method of manufacturing a secondary battery.

### 2. Description of the Related Art

Secondary batteries are batteries that can be charged and discharged, unlike primary batteries that cannot be recharged. Low-capacity secondary batteries may be used in small portable electronic devices, such as smartphones, feature phones, laptop computers, digital cameras, and camcorders, and high-capacity batteries are widely used as motor driving power sources, power storage batteries, and the like in hybrid vehicles, electric vehicles, and the like. These secondary batteries include electrode(s) including a positive electrode and/or a negative electrode, an electrode assembly including the electrode(s), a case which accommodates the electrode assembly, and an electrode terminal connected to the electrode assembly.

### invention

### SUMMARY

The invention is defined by the appended claims. The description that follows is subject to this limitation. Any invention lying outside the scope of said claims is only intended for illustrative as well as comparative purposes.

According to an aspect of embodiments of the present invention, a secondary battery and a method of manufacturing a secondary battery using an entire uncoated portion are provided.

According to another aspect of embodiments of the present invention, a secondary battery and a method of manufacturing a secondary battery capable of utilizing an uncoated portion as is without notching are provided.

According to another aspect of embodiments of the present invention, a secondary battery and a method of manufacturing a secondary battery with an improved contact area between an uncoated portion and a current collecting member are provided.

According to another aspect of embodiments of the present invention, a secondary battery and a method of manufacturing a secondary battery including a novel type of current collecting member are provided.

According to one or more embodiments, a secondary battery includes: an electrode assembly including a plurality of electrodes that are stacked, the plurality of electrodes each including: a mixture portion having a first width; and an uncoated portion which has a second width equal to the first width and extends from the mixture portion, and a plurality of the uncoated portions are stacked to form an uncoated portion bundle; and a current collecting member which covers at least two surfaces of the uncoated portion bundle and is connected to the uncoated portion bundle.

In one or more embodiments, the current collecting member may include a front surface member which is located in a direction in which the uncoated portion extends and is in contact with a front surface which is an end portion of the uncoated portion bundle.

In one or more embodiments, the current collecting member may further include: a first member connected to the front surface member, extending in a direction perpendicular to the front surface member, extending parallel to the uncoated portion, and in contact with a first surface of the uncoated portion bundle; and a second member connected to the front surface member, extending in the direction perpendicular to the front surface member, and in contact with a second surface of the uncoated portion bundle located opposite to the first surface.

In one or more embodiments, at least one of the first member and the second member may be configured as one or more plates extending from the front surface member.

In one or more embodiments, the current collecting member may further include a bent portion having a groove at a boundary between the front surface member and at least one of the first member and the second member.

In one or more embodiments, the current collecting member may further include a third member connected to the front surface member, extending in a direction perpendicular to the front surface member, and in contact with a third surface of the uncoated portion bundle, which is a stacked surface of the uncoated portion; and a fourth member connected to the front surface member, extending in the direction perpendicular to the front surface member, and in contact with a fourth surface of the uncoated portion bundle located opposite to the third surface.

In one or more embodiments, at least one of the third member and the fourth member may be configured as one or more plates extending from the front surface member.

In one or more embodiments, the current collecting member may further include a bent portion having a groove formed at a boundary between the front surface member and at least one of the third member and the fourth member.

In one or more embodiments, the current collecting member may further include: a first member connected to the front surface member, extending in a direction perpendicular to the front surface member, extending parallel to the uncoated portion, and in contact with a first surface of the uncoated portion bundle; a second member connected to the front surface member, extending in the direction perpendicular to the front surface member, and in contact with a second surface of the uncoated portion bundle located opposite to the first surface; a third member connected to the front surface member, extending in the direction perpendicular to the front surface member, and in contact with a third surface of the uncoated portion bundle, which is a stacked surface of the uncoated portion; and a fourth member connected to the front surface member, extending in the direction perpendicular to the front surface member, and in contact with a fourth surface of the uncoated portion bundle located opposite to the third surface, wherein the third surface is located adjacent to each of the first surface and the second surface.

In one or more embodiments, the current collecting member may further include a first welding line that connects the front surface member and the uncoated portion bundle and is parallel to a stacking direction of the uncoated portion.

In one or more embodiments, the current collecting member may further include a second welding line that connects the front surface member and the uncoated portion bundle and is perpendicular to a stacking direction of the uncoated portion.

In one or more embodiments, the secondary battery may further include a coating member on the current collecting member and configured to reduce friction between the current collecting member and the uncoated potion bundle.

In one or more embodiments, the secondary battery may further include an adhesive member on the current collecting member and configured to adhere the current collecting member and the uncoated potion bundle.

In one or more embodiments, the secondary battery may further include an insulating member at a boundary between the mixture portion and the uncoated portion while surrounding the uncoated portion bundle, and includes an insulating material.

In one or more embodiments, the electrode assembly may include a first electrode, a second electrode, and a separator between the first electrode and the second electrode, the first electrode, the second electrode, and the separator being stacked, and the uncoated portion bundle may include: a first uncoated portion bundle extending from the first electrode to a first side of the electrode assembly; and a second uncoated portion bundle extending from the second electrode to a second side of the electrode assembly.

In one or more embodiments, the current collecting member may include: a first current collecting member located on the first side of the electrode assembly and connected to the first uncoated portion bundle; and a second current collecting member located on the second side of the electrode assembly and connected to the second uncoated portion bundle.

In one or more embodiments, in a stacking direction of the first electrode, the second electrode and the separator, the current collecting member may be arranged so as not to overlap the separator.

According to one or more embodiments, a method of manufacturing a secondary battery including an electrode assembly which is formed by stacking a plurality of electrodes each including: a mixture portion having a first width; and an uncoated portion which has a second width equal to the first width and extends from the mixture portion includes: fixing an uncoated portion bundle formed by stacking a plurality of the uncoated portions; arranging a current collecting member to cover at least two surfaces of the uncoated portion bundle; and welding the current collecting member to the uncoated portion bundle.

In one or more embodiments, the arranging of the current collecting member may include arranging the current collecting member on the uncoated portion bundle by sliding.

In one or more embodiments, the arranging of the current collecting member may include bending a bent portion of the current collecting member while the current collecting member is rolled to correspond to a shape of the uncoated portion bundle.

### BRIEF DESCRIPTION OF THE DRAWINGS

The drawings attached to the present specification illustrate some embodiments of the present invention and further describe aspects and features of the present invention together with the detailed description of the present invention. However, the present invention is not to be construed as being limited to the drawings, in which:
FIG. 1 is a perspective view schematically illustrating a secondary battery according to an embodiment of the present invention;
FIG. 2 is a view schematically illustrating a secondary battery according to an embodiment of the present invention;
FIG. 3 is an exploded view schematically illustrating a secondary battery according to an embodiment of the present invention;
FIG. 4 is an exploded view schematically illustrating an electrode assembly according to an embodiment of the present invention;
FIG. 5 is a view schematically illustrating an electrode according to an embodiment of the present invention;
FIG. 6 is a perspective view schematically illustrating an electrode assembly according to an embodiment of the present invention;
FIG. 7 is a perspective view schematically illustrating a current collecting member according to an embodiment of the present invention;
FIG. 8 is a perspective view schematically illustrating an example in which a current collecting member according to an embodiment of the present invention is mounted on an electrode assembly;
FIG. 9 is a perspective view schematically illustrating a current collecting member according to an embodiment of the present invention;
FIG. 10 is a perspective view schematically illustrating a current collecting member according to an embodiment of the present invention;
FIG. 11 is a perspective view schematically illustrating a current collecting member according to an embodiment of the present invention;
FIG. 12 is a perspective view schematically illustrating a current collecting member according to an embodiment of the present invention;
FIG. 13 is a perspective view schematically illustrating a current collecting member according to an embodiment of the present invention;
FIG. 14 is a view schematically illustrating an example in which a current collecting plate according to an embodiment of the present invention is mounted on an electrode assembly;
FIG. 15 is a view schematically illustrating an example in which a current collecting plate according to an embodiment of the present invention is mounted on an electrode assembly;
FIG. 16 is a perspective view schematically showing a current collecting member according to an embodiment of the present invention;
FIG. 17 is a view schematically illustrating an example in which the current collecting member of FIG. 16 is disposed on an electrode assembly according to an embodiment of the present invention;
FIG. 18 is a view schematically illustrating an example in which the current collecting member of FIG. 16 is disposed on the electrode assembly according to an embodiment of the present invention;
FIG. 19 is a view schematically illustrating an example in which a coating member is applied on a current collecting member according to an embodiment of the present invention;
FIG. 20 is a view schematically illustrating an electrode assembly provided with an insulating member according to an embodiment of the present invention;
FIG. 21 is a perspective view schematically illustrating an insulating member according to an embodiment of the present invention;
FIG. 22 is a view schematically illustrating an example of a welding line between an uncoated portion and a current collecting member according to an embodiment of the present invention;
FIG. 23 is a view schematically illustrating an example of a welding line between an uncoated portion and a current collecting member according to an embodiment of the present invention; and
FIG. 24 is a flowchart illustrating a method of manufacturing a secondary battery according to an embodiment of the present invention.

### DETAILED DESCRIPTION

Herein, some example embodiments of the present invention will be described in further detail with reference to the attached drawings. Terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the embodiments of the invention and do not necessarily represent all of the technical ideas of the invention, and that there may be various equivalents and modifications that may replace the example embodiments at the time of filing this specification.

When used herein, the terms "comprise" or "include" and/or "comprising" or "including" specify the presence of the mentioned shapes, numbers, steps, operations, members, elements, and/or groups thereof, but are not intended to exclude the presence or addition of one or more other shapes, numbers, operations, members, elements, and/or groups thereof.

In addition, to facilitate understanding of the invention, the attached drawings may not be drawn to actual scale, and the dimensions of some components may be exaggerated. In addition, the same reference numbers may be assigned to the same components in different embodiments.

The statement that two objects for comparison are "equal" or "the same" means that they are equal, the same, or substantially the same. Substantially the same may include deviations that are considered low in the art, for example, deviations of less than 5%. Additionally, uniformity of a parameter over a given region may mean uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the components may be directly connected or coupled to each other, but it is to be understood that one or more other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, if the elements or features in the drawings are inverted, an element described as "lower" or "below" "becomes "upper" or "above." Therefore, the term "below" can encompass both the upward and downward directions.

The terms used in the present specification are intended to describe the embodiments of the present disclosure, and are not intended to limit the present disclosure.

In the present specification, an X axis represents a first direction. For example, the first direction (X axis) may be a thickness direction of an electrode 41. For example, the first direction (X axis) may be a stacking direction of the electrode 41.

In the present specification, a Y axis represents a second direction. The second direction (Y axis) is perpendicular to the first direction (X axis). For example, the second direction (Y axis) may be a longitudinal direction of the electrode 41. For example, the second direction (Y axis) may be a direction in which the electrode 41 extends.

In the present specification, a Z axis represents a third direction. The third direction (Z axis) is perpendicular to the first direction (X axis) and the second direction (Y axis). For example, the third direction (Z axis) may be a width direction of the electrode 41.

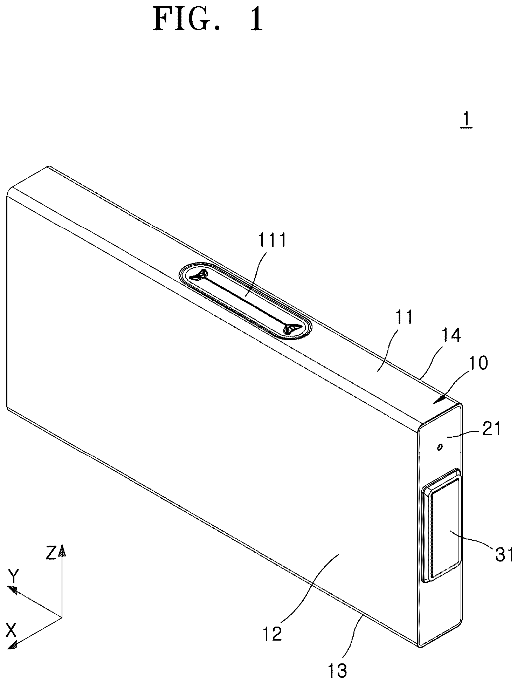

FIG. 1 is a perspective view schematically illustrating a secondary battery according to an embodiment of the present invention.

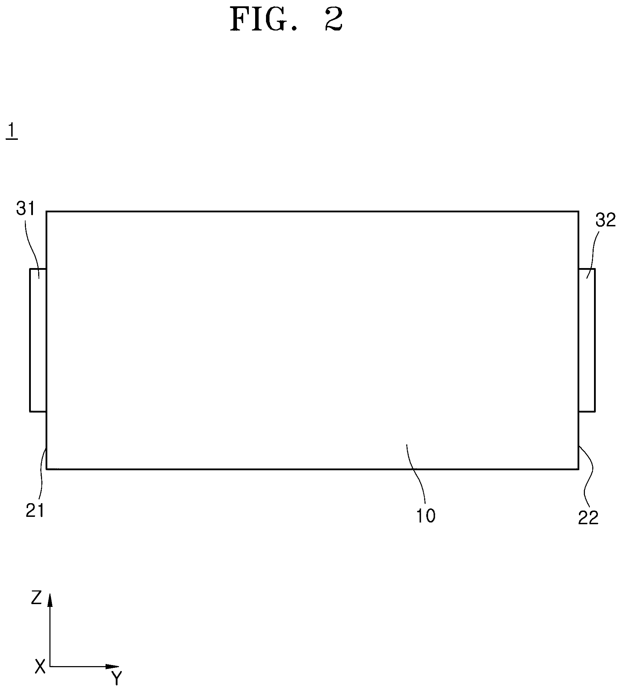

FIG. 2 is a view schematically illustrating the secondary battery according to an embodiment of the present invention.

A secondary battery 1 according to an embodiment of the present invention includes: a case 10; cap plates 21 and 22 coupled to the case 10; and terminals 31 and 32 coupled to the cap plates 21 and 22.

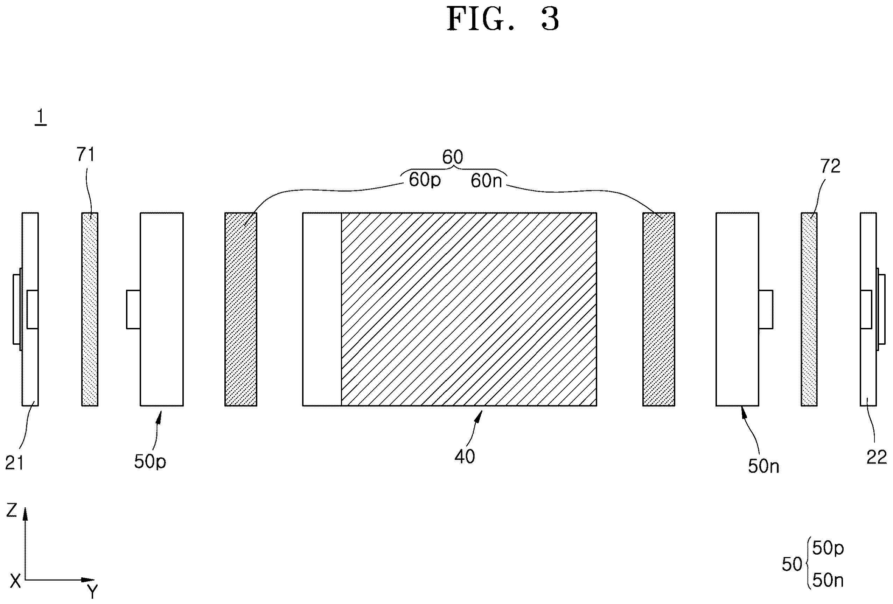

The case 10 generally forms an exterior of the secondary battery 1 and accommodates an electrode assembly 40 (see FIG. 3).

In an embodiment, for example, the case 10 includes a first short side portion 11, a second short side portion 13, a first long side portion 12, and a second long side portion 14.

For example, the first short side portion 11 and the second short side portion 13 are disposed to face each other in the third direction (Z axis). For example, the first short side portion 11 and the second short side portion 13 are disposed parallel to each other.

In an embodiment, for example, the first short side portion 11 has a generally rectangular plate shape. For example, the second short side portion 13 may be formed corresponding to the shape and/or area of the first short side portion 11. For example, the second short side portion 13 has a generally rectangular plate shape.

For example, an edge of the first short side portion 11 is connected to an edge of the first long side portion 12. For example, another edge of the first short side portion 11 is connected to an edge of the second long side portion 14. In an embodiment, for example, the first short side portion 11 may have an edge that meets each of the first and second long side portions 12 and 14 to form a curved surface.

For example, an edge of the second short side portion 13 is connected to another edge of the first long side portion 12. For example, another edge of the second short side portion 13 is connected to another edge of the second long side portion 14. In an embodiment, for example, the second short side portion 13 may have an edge that meets each of the first and second long side portions 12 and 14 to form a curved surface.

In an embodiment, the first short side portion 11 may provide a vent 111. For example, the vent 111 includes a notch. If an internal pressure of the case 10 is greater than a reference pressure, the notch ruptures to discharge gas inside the case 10 to the outside.

For example, the first long side portion 12 has a generally rectangular plate shape. For example, the area of the first long side portion 12 may be larger than the area of the first short side portion 11 and/or the second short side portion 13.

For example, the second long side portion 14 may be formed corresponding to a shape and/or area of the first long side portion 12. For example, the second long side portion 14 has a generally rectangular plate shape. For example, the area of the second long side portion 14 may be larger than the area of the first short side portion 11 and/or the second short side portion 13.

For example, the case 10 may form an opening through the first and second short side portions 11 and 13 and the first and second long side portions 12 and 14. The opening may interconnect the space inside and outside the case 10. For example, the case 10 may include a first opening located at a side and a second opening located at another side.

For example, the case 10 may be formed in the form of a rectangular parallelepiped having a side and another side open. For example, the case 10 may be formed to have a rectangular cross-section parallel to a Y-Z plane.

In an embodiment, for example, the case 10 may include any of stainless steel (e.g., SUS), iron (Fe), carbon steel, and the like.

The cap plates 21 and 22 are coupled to the case 10 to seal the case 10. For example, the cap plates 21 and 22 are coupled to the openings of the case 10. For example, the cap plates 21 and 22 may be coupled to the case 10 by any of various types of coupling methods, such as any of welding, bolting, fitting, and the like.

For example, the cap plates 21 and 22 may be formed in a flat plate shape.

In an embodiment, for example, the cap plates 21 and 22 include the same or similar material as the case 10. For example, the cap plates 21 and 22 may include any of stainless steel (e,g,, SUS), iron (Fe), carbon steel, and the like. Accordingly, when the cap plates 21 and 22 are joined to the case 10 by welding, the cap plates 21 and 22 may be easily welded to the case 10. However, materials included in the cap plates 21 and 22 are not limited thereto. For example, the cap plates 21 and 22 may include aluminum (Al).

The cap plates 21 and 22 include a first cap plate 21 and a second cap plate 22. The first cap plate 21 may be coupled to the first opening located at a side of the case 10. The second cap plate 22 may be coupled to the second opening located at another side of the case 10.

The terminals 31 and 32 may protrude outward from the cap plates 21 and 22. The terminals 31 and 32 include a first terminal 31 and a second terminal 32.

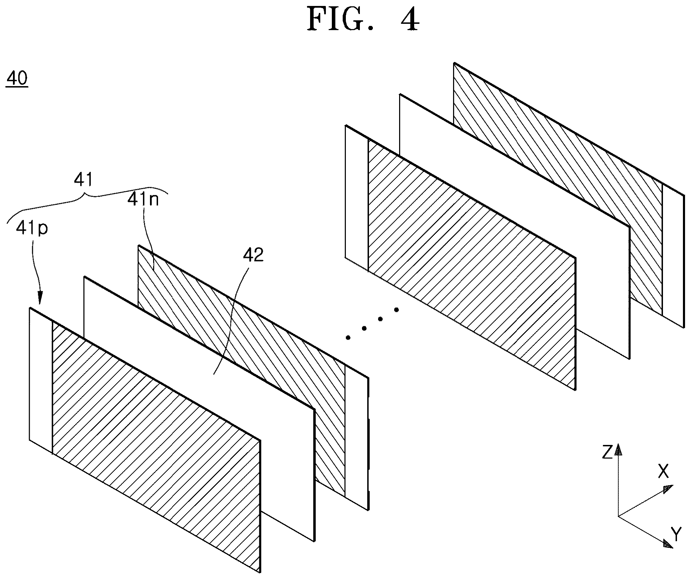

The first terminal 31 is electrically connected to a first electrode 41p (see FIG. 4). For example, the first terminal 31 is inserted into the first cap plate 21. FIG. 1 illustrates an example in which the first terminal 31 has a rectangular cross-sectional shape, but a cross-sectional shape of the first terminal 31 is not limited thereto, and may have any of various shapes, such as any of a circular shape, an oval shape, a polygonal shape, and the like. The first terminal 31 may be formed of an electrically conductive material, such as aluminum, nickel, copper, or the like.

A side of the first terminal 31 may protrude outward from the first cap plate 21 in the second direction (Y axis). Another side of the first terminal 31 may extend from the first cap plate 21 into the inside of the case 10 and may be connected to the first electrode 41p.

In an embodiment, the secondary battery 1 may further include a first gasket located between the first cap plate 21 and the first terminal 31. The first gasket may electrically insulate the first cap plate 21 from the first terminal 31 and may prevent or substantially prevent moisture or foreign materials from flowing between the first cap plate 21 and the first terminal 31.

For example, the first gasket may be formed of an insulating material, such as polyethylene (PE), polypropylene (PP), polyethylene terephthalate (PET), rubber, and the like. For example, the first gasket may be fixed between the first cap plate 21 and the first terminal 31 by pressing, injection, adhesion, or the like.

The second terminal 32 is electrically connected to a second electrode 41n (see FIG. 4). For example, the second terminal 32 is inserted into the second cap plate 22. FIG. 1 illustrates an example in which the second terminal 32 has a rectangular cross-sectional shape, but a cross-sectional shape of the second terminal 32 is not limited thereto, and may have any of various shapes, such as any of a circular shape, an oval shape, a polygonal shape, and the like. The second terminal 32 may be formed of an electrically conductive material, such as aluminum, nickel, copper, or the like.

A side of the second terminal 32 may protrude outward from the second cap plate 22 in the second direction (Y axis). For example, the second terminal 32 may protrude in a direction opposite to a direction in which the first terminal 31 protrudes. Another side of the second terminal 32 may extend from the second cap plate 22 into the inside of the case 10 and may be connected to the second electrode 41n.

In an embodiment, the secondary battery 1 may further include a second gasket located between the second cap plate 22 and the second terminal 32. The second gasket may electrically insulate the second cap plate 22 from the second terminal 32 and may prevent or substantially prevent moisture or foreign materials from flowing between the second cap plate 22 and the second terminal 32.

For example, the second gasket may be formed of an insulating material, such as any of polyethylene (PE), polypropylene (PP), polyethylene terephthalate (PET), rubber, and the like. For example, the second gasket may be fixed between the second cap plate 22 and the second terminal 32 by pressing, injection, adhesion, or the like.

In an embodiment, for example, at least one of the first cap plate 21 and the second cap plate 22 may further include an electrolyte inlet where an electrolyte is injected and a sealing cap is installed.

FIG. 3 is an exploded view schematically illustrating a secondary battery according to an embodiment of the present invention.

FIG. 4 is an exploded view schematically illustrating an electrode assembly according to an embodiment of the present invention.

A secondary battery 1 (e.g., the secondary battery 1 described with respect to FIGS. 1 and 2) according to an embodiment of the present invention includes an electrode assembly 40 and a current collecting member 50.

For example, the secondary battery 1 further includes a case 10 that accommodates the electrode assembly 40 (e.g., the case 10 described with respect to FIGS. 1 and 2). FIG. 3 schematically illustrates an exploded view of the secondary battery 1 in which the case 10 is not shown.

For example, the secondary battery 1 further includes cap plates 21 and 22 coupled to openings of the case 10. The description of the cap plates 21 and 22 may be the same as or similar to that described with respect to FIGS. 1 and 2.

For example, the secondary battery 1 includes the electrode assembly 40.

For example, the electrode assembly 40 includes a plurality of electrodes 41 and may be formed by stacking the plurality of electrodes 41. The plurality of electrodes 41 include one or more first electrodes 41p and one or more second electrodes 41n. In an embodiment, for example, the electrode assembly 40 is formed by stacking the first electrode 41p, the second electrode 41n, and a separator 42 located between the first electrode 41p and the second electrode 41n.

For example, the electrode assembly 40 may be formed in a stacked form in which a plurality of first electrodes 41p, a plurality of second electrodes 41n, and a plurality of separators 42 are sequentially stacked in the first direction (X axis). However, the electrode assembly 40 is not limited to this form. For example, the electrode assembly 40 may be formed in a jelly-roll shape formed by winding the first electrode 41p, the second electrode 41n, and the separator 42 clockwise or counterclockwise around a winding axis in a state in which the first electrode 41p, the second electrode 41n, and the separator 42 are stacked. Herein, an example in which the electrode assembly 40 is formed in a stacked form will be described.

For example, the first electrode 41p may function as either a positive electrode or a negative electrode of the electrode assembly 40. Herein, a case in which the first electrode 41p is a positive electrode will be described as an example.

For example, the second electrode 41n may function either a negative electrode or a positive electrode of the electrode assembly 40, with a different polarity from the first electrode 41p. Herein, a case in which the second electrode 41n is a negative electrode will be described as an example.

The separator 42 is located between the first electrode 41p and the second electrode 41n. The separator 42 may prevent or substantially prevent the first electrode 41p and the second electrode 41n from coming into contact with each other and may prevent or substantially prevent a short circuit between the first electrode 41p and the second electrode 41n.

A further detailed description of each component of the electrode assembly 40 is provided below.

### Positive electrode active material

As the positive electrode active material, a compound capable of reversible intercalation and deintercalation of lithium (lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and some examples thereof may include lithium nickel-based oxides, lithium cobalt-based oxides, lithium manganese-based oxides, lithium iron phosphate-based compounds, cobalt-free nickel-manganese-based oxides, or a combination thereof.

For example, a compound represented as any of chemical formulas below may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L' is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize high capacity and thus may be applied to high capacity, high density lithium batteries.

### Positive electrode

The positive electrode for the secondary battery 1 may include a current collector and a positive electrode mixture layer formed on the current collector. The positive electrode mixture layer may include a positive electrode active material, and may further include a binder and/or a conductive material.

As an example, the positive electrode may further include an additive that may function as a sacrificial positive electrode.

In an embodiment, the content of the positive electrode active material may be 90 wt% to 99 wt% based on 100 wt% of the positive electrode mixture layer, and the content of each of the binder and the conductive material may be 0.5 wt% to 5 wt% based on 100 wt% of the positive electrode mixture layer.

The binder may attach particles constituting the positive electrode active material to each other well and also attach the positive electrode active material to the current collector well. Representative examples of the binder may include polyvinyl alcohol, carboxymethylcellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material imparts conductivity to the electrode, and any suitable material which does not cause a chemical change and is electrically conductive may be used. Examples of the conductive material may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, or the like; a conductive polymer, such as a polyphenylene derivative; or a mixture thereof.

In an embodiment, Al may be used as the current collector, but the present invention is not limited thereto.

### Negative electrode active material

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, plate-shaped, flaky, spherical, or fibrous natural graphite or artificial graphite, and examples of the amorphous carbon may include soft carbon or hard carbon, mesophase pitch carbide, calcined coke, or the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping the lithium. The Si-based negative electrode active material may include silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

### Negative electrode

The negative electrode for the secondary battery 1 may include a current collector and a negative electrode mixture layer located on the current collector. The negative electrode mixture layer may include a negative electrode active material and may further include a binder and/or a conductive material.

In an embodiment, for example, the negative electrode mixture layer may include 90 to 99.5 wt% of the negative electrode active material, 0.5 to 5 wt% of the binder, and 0 to 5 wt% of the conductive material.

The binder may attach particles constituting the negative electrode active material to each other well, and also attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound capable of imparting viscosity may be further included. This cellulose-based compound may be used by mixing one or more of carboxymethyl cellulose, hydroxypropyl methyl cellulose, methyl cellulose, and alkali metal salts thereof. In an embodiment, Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material imparts conductivity to the electrode, and any suitable material which does not cause a chemical change and is electrically conductive may be used. Some examples may include a carbon-based material, such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, or the like; a conductive polymer such as a polyphenylene derivative; or a mixture thereof.

In an embodiment, the negative electrode current collector may be selected from copper foil, nickel foil, stainless steel foil, titanium foil, nickel foam, copper foam, a polymer substrate coated with a conductive metal, and a combination thereof.

### Separator

The separator 42 may be present between the first electrode 41p and the second electrode 41n depending on a type of secondary battery 1. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator may include a porous substrate and a coating layer containing an organic material, an inorganic material, or a combination thereof located on one or both, or opposite, surfaces of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g. Teflon), or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

### Electrolyte

In an embodiment, the electrolyte for the secondary battery 1 includes a non-aqueous organic solvent and a lithium salt.

The non-aqueous organic solvent acts as a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent include methyl acetate, ethyl acetate, n-propyl acetate, dimethyl acetate, methyl propionate, ethyl propionate, decanolide, mevalonolactone, and valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. As the alcohol-based solvent, ethyl alcohol, isopropyl alcohol, and the like may be used, and as the aprotic solvent, a nitrile such as R-CN (R is a straight, branched, or cyclic hydrocarbon group having 2 to 20 carbon atoms, and may include a double bond, an aromatic ring, or an ether bond), an amide such as dimethylformamide, a dioxolane such as 1,3-dioxolane or 1,4-dioxolane, a sulfolane, and the like may be used.

The non-aqueous organic solvent may be used alone or in a mixture of two or more.

In an embodiment, if using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the lithium battery and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethanesulfonate, lithium tetrafluoroethanesulfonate, lithium difluorobis(oxalato)phosphate (LiDFBOP), and lithium bis(oxalato)borate (LiBOB).

As described in FIGS. 1 and 2, the case 10 is sealed after receiving the electrode assembly 40 and the electrolyte. For example, the case 10 is sealed by the cap plates 21 and 22.

The secondary battery 1 includes the current collecting member 50.

For example, the current collecting member 50 is disposed between the electrode assembly 40 and the cap plates 21 and 22. The current collecting member 50 is electrically connected to the electrode assembly 40. The current collecting member 50 may collect current from the electrode assembly 40. The current collecting member 50 is electrically connected to the terminals 31 and 32. The current collecting member 50 may be formed of a material which is electrically conductive. For example, the current collecting member 50 may include copper, nickel, aluminum, stainless steel, or the like.

For example, the current collecting member 50 includes a first current collecting member 50p and a second current collecting member 50n.

For example, the first current collecting member 50p is electrically connected to the first electrode 41p. For example, the first current collecting member 50p is connected to an uncoated portion of the first electrode 41p. For example, the first current collecting member 50p is electrically connected to the first terminal 31.

For example, the second current collecting member 50n is electrically connected to the second electrode 41n. For example, the second current collecting member 50n is connected to an uncoated portion of the second electrode 41n. For example, the second current collecting member 50n is electrically connected to the second terminal 32.

In an embodiment, for example, the secondary battery 1 may further include an insulating member 60.

The insulating member 60 is located between the electrode assembly 40 and the current collecting member 50. The insulating member 60 is arranged to surround at least one side of the electrode assembly 40. The insulating member 60 may protect the electrode assembly 40. For example, the insulating member 60 protects the separator 42. For example, the insulating member 60 may prevent or substantially prevent the separator 42 from being damaged when the current collecting member 50 is joined to the electrode assembly 40.

For example, the insulating member 60 includes a first insulating member 60p and a second insulating member 60n.

For example, the first insulating member 60p is located between the electrode assembly 40 and the first current collecting member 50p. For example, the first insulating member 60p is arranged to surround a side of the electrode assembly 40. For example, the first insulating member 60p may prevent or substantially prevent the separator 42 extending to a side of the electrode assembly 40 from being damaged.

For example, the second insulating member 60n is located between the electrode assembly 40 and the second current collecting member 50n. For example, the second insulating member 60n is arranged to surround another side of the electrode assembly 40. For example, the second insulating member 60n may prevent or substantially prevent the separator 42 extending to another side of the electrode assembly 40 from being damaged.

For example, the secondary battery 1 may further include insulating plates 71 and 72.

In an embodiment, for example, as shown in FIG. 3, the insulating plates 71 and 72 are located between the cap plates 21 and 22 and the current collecting member 50. In an embodiment, for example, unlike as shown in FIG. 3, the insulating plates 71 and 72 may be located between the current collecting member 50 and the electrode assembly 40.

In an embodiment, for example, the insulating plates 71 and 72 may be formed in a rectangular plate shape, but a shape of the insulating plates 71 and 72 is not limited thereto. In an embodiment, for example, the insulating plates 71 and 72 may include through holes through which the cap plates 21 and 22 and the current collecting member 50 may be electrically connected.

For example, the insulating plates 71 and 72 allow the cap plates 21 and 22 to be insulated except in regions requiring electrical connection. For example, the insulating plates 71 and 72 include insulating materials. In an embodiment, for example, the insulating material may include any of polyethylene (PE), polypropylene (PP), polyethylene terephthalate (PET), rubber, and the like.

For example, the insulating plates 71 and 72 include at least one of the first insulating plate 71 and the second insulating plate 72. For example, the first insulating plate 71 is located between the first cap plate 21 and the first current collecting member 50p. For example, the second insulating plate 72 is located between the second cap plate 22 and the second current collecting member 50n.

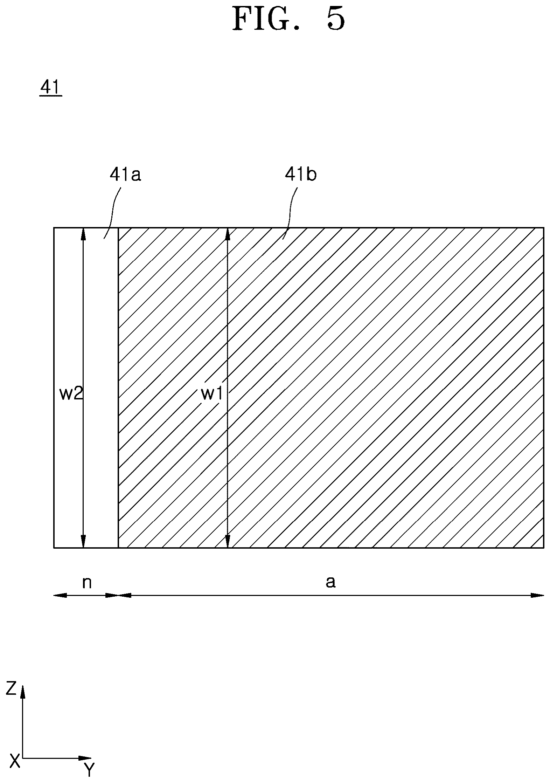

FIG. 5 is a view schematically illustrating an electrode according to an embodiment of the present invention.

A secondary battery 1 (e.g., the secondary battery 1 described with respect to FIGS. 1 to 4) according to an embodiment of the present invention includes an electrode assembly 40 (e.g., the electrode assembly 40 described with respect to FIGS. 1 to 4) and a current collecting member 50 (e.g., the current collecting member 50 described with respect to FIGS. 3 and 4).

The electrode assembly 40 is formed by stacking a plurality of electrodes 41. The electrode 41 includes a first electrode 41p and a second electrode 41n. The description of the electrode 41 described below may be equally or similarly applied to the first electrode 41p and/or the second electrode 41n.

The electrode 41 includes a substrate 41a and a mixture layer 41b formed on a portion of the substrate 41a.

For example, the substrate 41a includes the current collector described in FIGS. 3 and 4. For example, if the electrode 41 is a positive electrode, the substrate 41a includes a positive electrode current collector. In an embodiment, for example, the positive electrode current collector includes aluminum (Al). For example, if the electrode 41 is a negative electrode, the substrate 41a includes a negative electrode current collector. In an embodiment, for example, the negative electrode current collector includes copper (Cu).

For example, the mixture layer 41b includes an active material. For example, if the electrode 41 is a positive electrode, the active material includes a positive electrode active material. For example, the positive electrode active material includes a compound capable of reversible intercalation and deintercalation of lithium (lithiated intercalation compound). For example, if the electrode 41 is a negative electrode, the mixture layer 41b includes a negative electrode active material. For example, the negative electrode active material includes a material capable of reversibly intercalating/deintercalating lithium ions, lithium metal, an alloy of lithium and a metal, a material capable of doping and dedoping lithium, or a transition metal oxide.

In an embodiment, for example, the mixture layer 41b may further include a conductive material and/or a binder.

In an embodiment, for example, the mixture layer 41b may be formed in the form of a slurry and coated on the substrate 41a. In an embodiment, for example, the mixture layer 41b may be formed in the form of a freestanding film including an active material and attached onto the substrate 41a.

For example, the mixture layer 41b is provided on at least a portion of the substrate 41a. In an embodiment, for example, the mixture layer 41b is provided on a portion of a surface of the substrate 41a. In an embodiment, for example, the mixture layer 41b is provided on a portion of both, or opposite, surfaces of the substrate 41a. In this case, a region in which the mixture layer 41b is provided on a portion of the substrate 41a may be referred to as a mixture portion a. In addition, as another portion of the substrate 41a, a region where no mixture layer 41b is provided and the substrate 41a is exposed to the outside may be referred to as an uncoated portion n.

In an embodiment, the electrode 41 includes a mixture portion a formed with a first width w1, and an uncoated portion n formed with a second width w2 equal to the first width w1 and extending from the mixture portion a.

For example, the electrode 41 is formed in a generally rectangular plate shape. For example, the electrode 41 is formed to extend in the second direction (Y axis). In addition, for example, the electrode 41 is formed by extending a width in the third direction (Z axis). In this case, the electrode 41 may have a length extending in the second direction (Y axis) equal to or longer than the width extending in the third direction (Z axis). Herein, a case in which the electrode 41 has a rectangular plate shape in which a width extending in the third direction (Z axis) is shorter than a length extending in the second direction (Y axis) will be described as an example, but a shape of the electrode 41 is not limited thereto.

The electrode 41 includes the mixture portion a and the uncoated portion n.

For example, the uncoated portion n is formed on a side of the mixture portion a. Accordingly, the uncoated portion n may extend to a side of the electrode assembly 40.

In an embodiment, the uncoated portion n is not separately notched to form a tab. In this case, the tab is a member electrically connecting the electrode 41 and the current collecting member 50. The uncoated portion n functions as a tab as a whole in an unnotched state. As the uncoated portion n is not separately notched, the electrode 41 may be formed to have a same width as the width of the substrate 41a as a whole.

For example, the mixture portion a is formed to have the first width w1. The first width w1 represents a shortest distance between an edge and another edge of the mixture portion a in the third direction (Z axis). In this case, the edge of the mixture portion a and the other edge are located opposite to each other.

For example, the uncoated portion n is formed on a side of the mixture portion a to have the second width w2. The second width w2 represents a shortest distance between an edge and another edge of the uncoated portion n in the third direction (Z axis). In this case, the edge of the uncoated portion n and the other edge are located opposite to each other.

In an embodiment, the second width w2 is the same as the first width w1. In this case, a range of "same" includes a value within an error range of ±5%. For example, the first width w1 may be formed to be 0.95 to 1.05 times the second width w2.

In an embodiment, for example, when viewed in the Y-Z plane, the mixture portion a and the uncoated portion n may be connected to each other to form a rectangular shape. In an embodiment, the electrode 41 may be formed to have a constant width in the third direction (Z axis).

If the size of the tab is smaller than the size of the electrode 41, a flow of electrons may be disturbed, and, thus, electrical resistance may occur. However, the electrode 41 according to an embodiment of the present invention may increase the area of the tab by utilizing the entire uncoated portion n as a tab. Accordingly, electrical resistance of the electrode 41 may be reduced and heat generation may be reduced. In addition, according to an embodiment of the present invention, a separate notching process for forming a tab is not required. Accordingly, embodiments of the present invention may facilitate and simplify the process for forming the electrode 41.

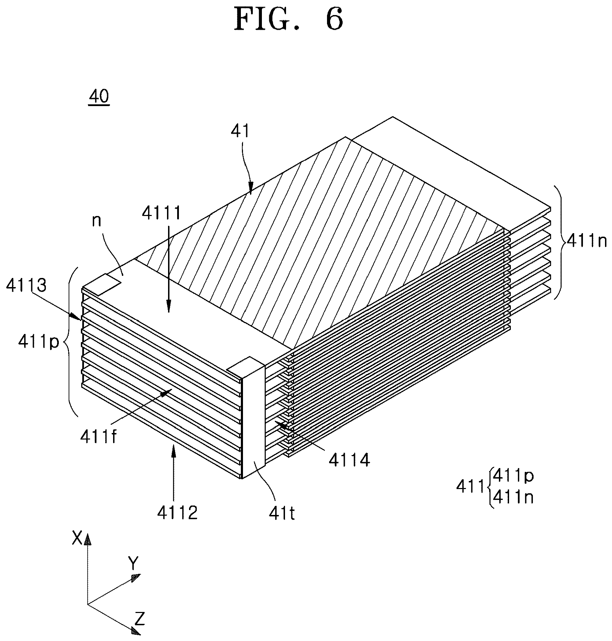

Herein, in FIG. 6, the electrode assembly 40 in which the electrodes 41 are stacked will be described.

FIG. 6 is a view schematically illustrating the electrode assembly according to an embodiment of the present invention.

A secondary battery 1 (e.g., the secondary battery 1 described with respect to FIGS. 1 to 5) according to an embodiment of the present invention includes an electrode assembly 40 (e.g., the electrode assembly 40 described with respect to FIGS. 1 to 5) and a current collecting member 50 (e.g., the current collecting member 50 described with respect to FIGS. 3 to 5).

The electrode assembly 40 is formed by stacking a plurality of electrodes 41. The plurality of electrodes 41 include a first electrode 41p and a second electrode 41n. For example, the electrode assembly 40 is formed by stacking the first electrode 41p, the second electrode 41n, and a separator 42 between the first electrode 41p and the second electrode 41n in the first direction (X axis).

For example, the electrode 41 includes a mixture portion a and an uncoated portion n. For example, the uncoated portion n is formed on a side of the mixture portion a. The uncoated portion n may extend to a side of the electrode assembly 40.

The first electrode 41p may be arranged to extend a first uncoated portion to a side of the electrode assembly 40. The second electrode 41n may be arranged to extend a second uncoated portion to another side of the electrode assembly 40. The uncoated portions of the first electrode 41p and the second electrode 41n may extend in opposite directions. Accordingly, the first uncoated portion and the second uncoated portion in the electrode assembly 40 may not come into contact with each other.

As described above, the electrode assembly 40 is formed by stacking the plurality of electrodes 41. Accordingly, a plurality of uncoated portions n are also stacked. For example, the first uncoated portion is stacked and extends to a side of the electrode assembly 40. For example, the second uncoated portion is stacked and extends to another side of the electrode assembly 40.

A region in which the plurality of uncoated portions n are stacked may be referred to as an uncoated portion bundle 411. The electrode assembly 40 includes the uncoated portion bundle 411. In an embodiment, as the first width w1 and the second width w2 are formed equal to each other, the uncoated portion bundle 411 may also be formed to have the same width as the portion formed by stacking the mixture portions a.

For example, the uncoated portion bundle 411 includes a first uncoated portion bundle 411p formed by stacking the first uncoated portions and a second uncoated portion bundle 411n formed by stacking the second uncoated portions.

The first uncoated portion bundle 411p may extend to a side (e.g., a first side) of the electrode assembly 40. The second uncoated portion bundle 411n may extend to another side (e.g., a second side) of the electrode assembly 40. The second uncoated portion bundle 411n may extend in a direction opposite to a direction in which the first uncoated portion bundle 411p extends.

The contents of the uncoated portion bundle 411 described below may be applied the same or similarly to the first uncoated portion bundle 411p and the second uncoated portion bundle 411n.

In an embodiment, for example, the uncoated portion bundle 411 may be formed in the form of a rectangular parallelepiped structure constituting a portion of the electrode assembly 40. For example, the uncoated portion bundle 411 may be formed in the form of a rectangular parallelepiped structure having a side connected to a portion of the electrode assembly 40 and extending from the portion of the electrode assembly 40. However, a shape of the uncoated portion bundle 411 is not limited thereto, and the uncoated portion bundle 411 may be formed in any suitable form formed by stacking the uncoated portions n. Herein, a case in which the uncoated portion bundle 411 is formed in the form of a rectangular parallelepiped structure constituting a portion of the electrode assembly 40 will be described as an example.

In FIG. 6, reference numeral 411f illustrates a front surface of the uncoated portion bundle 411. The front surface 411f is a surface perpendicular to a direction in which the uncoated portion n extends and refers to a surface formed by stacking end portions of the uncoated portions n.

Although not shown in FIG. 6, the uncoated portion bundle 411 includes a rear surface opposite to the front surface 411f. The rear surface is connected to a region where the mixture portions are stacked.

In FIG. 6, reference numeral 4111 represents a first surface of the uncoated portion bundle 411. The first surface 4111 is adjacent to the front surface 411f and extends in a perpendicular direction from the front surface 411f.

In FIG. 6, reference numeral 4112 represents a second surface of the uncoated portion bundle 411. The second surface 4112 is adjacent to the front surface 411f and extends in a perpendicular direction from the front surface 411f. The second surface 4112 may be disposed parallel to the first surface 4111. The second surface 4112 may be disposed to be opposite to the first surface 4111.

A direction from the second surface 4112 toward the first surface 4111 may be parallel to the stacking direction of the electrodes 41. For example, the direction from the second surface 4112 toward the first surface 4111 may be the first direction (X axis).

In FIG. 6, reference numeral 4113 represents a third surface of the uncoated portion bundle 411. The third surface 4113 is adjacent to the front surface 411f and extends in a perpendicular direction from the front surface 411f. The third surface 4113 is adjacent to the first surface 4111 and the second surface 4112 and may extend in a perpendicular direction from each of the first surface 4111 and the second surface 4112.

In FIG. 6, reference numeral 4114 represents a fourth surface of the uncoated portion bundle 411. The fourth surface 4114 is adjacent to the front surface 411f and extends in a perpendicular direction from the front surface 411f. The fourth surface 4114 is adjacent to the first surface 4111 and the second surface 4112 and may extend in a perpendicular direction from each of the first surface 4111 and the second surface 4112. The fourth surface 4114 may be disposed parallel to the third surface 4113. The fourth surface 4114 may be disposed to be opposite to the third surface 4113.

A direction from the third surface 4113 toward the fourth surface 4114 may be parallel to the width direction of the electrodes 41. For example, the direction from the third surface 4113 toward the fourth surface 4114 may be the third direction (Z axis).

The first surface 4111, the second surface 4112, the third surface 4113, and the fourth surface 4114 may form an exterior of a peripheral surface of the uncoated portion bundle 411.

However, the front surface 411f, the rear surface, the first surface 4111, the second surface 4112, the third surface 4113, and the fourth surface 4114 are arbitrarily named for the convenience of describing the uncoated portion bundle 411, and these names and definitions do not limit the structure or shape of the uncoated portion bundle 411.

In an embodiment, the uncoated portion bundle 411 may be fixed by a tape 41t. The tape 41t may fix the electrode assembly 40. For example, the tape 41t may be attached to at least one side of the uncoated portion bundle 411 to fix the uncoated portion bundle 411.

The tape 41t may include an insulating material to prevent or substantially prevent a short circuit from occurring in the electrode assembly 40. In an embodiment, for example, the tape 41t includes an insulating layer including an insulating material. In an embodiment, the tape 41t may include an adhesive material that adheres to the uncoated portion bundle 411. In an embodiment, for example, the tape 41t includes an insulating layer and an adhesive layer that adheres the insulating layer to the uncoated portion bundle 411. The tape 41t may prevent or substantially prevent the electrode assembly 40 from shaking in the case 10.

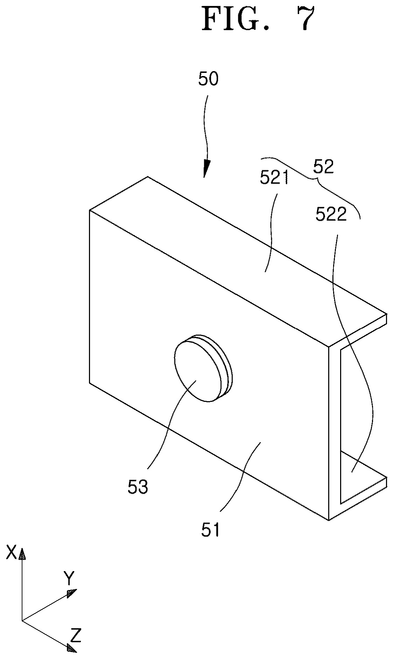

FIG. 7 is a view schematically illustrating a current collecting member according to an embodiment of the present invention.

A secondary battery 1 (e.g., the secondary battery 1 described with respect to FIGS. 1 to 5) according to an embodiment of the present invention includes an electrode assembly 40 (e.g., the electrode assembly 40 described with respect to FIGS. 1 to 5) and a current collecting member 50 (e.g., the current collecting member 50 described with respect to FIGS. 3 to 5).

The current collecting member 50 is electrically connected to the electrode assembly 40 by being joined to the uncoated portion bundle 411.

The current collecting member 50 is connected to the uncoated portion bundle 411 while covering at least two surfaces of the uncoated portion bundle 411. For example, the current collecting member 50 is in contact with the front surface 411f of the uncoated portion bundle 411. In addition, for example, the current collecting member 50 is in contact with at least one of the first surface 4111, the second surface 4112, the third surface 4113, and the fourth surface 4114 of the uncoated portion bundle 411.

For example, the current collecting member 50 includes a front surface member 51 and a side surface member 52. In addition, for example, the current collecting member 50 may further include a boss 53.

For example, the front surface member 51 forms an exterior of a surface of the current collecting member 50. The front surface member 51 may support the boss 53.

The front surface member 51 is located in a direction in which the uncoated portion n extends. For example, the front surface member 51 is in contact with the front surface 411f which is an end portion of the uncoated portion bundle 411. For example, the front surface member 51 is located between the uncoated portion bundle 411 and each of the cap plates 21 and 22. For example, a first front surface member included in the first current collecting member 50p is located between the first uncoated portion bundle 411p and the first cap plate 21. For example, a second front surface member included in the second current collecting member 50n is located between the second uncoated portion bundle 411n and the second cap plate 22.

In an embodiment, the front surface member 51 may be formed in a shape corresponding to the front surface 411f of the uncoated portion bundle 411. In an embodiment, for example, the front surface 411f of the uncoated portion bundle 411 is formed in a rectangular shape, and the front surface member 51 may be formed in a generally rectangular plate shape. However, the shape of the front surface member 51 is not limited thereto, and the front surface member 51 may have any of various shapes, such as any of a circle, an oval, and a polygon in addition to the rectangle shown in FIG. 7.

The front surface member 51 may be formed with an area corresponding to the front surface 411f of the uncoated portion bundle 411. In an embodiment, for example, the front surface member 51 may be formed to have a same area as the front surface 411f of the uncoated portion bundle 411, or may be formed to have a larger area than the front surface 411f of the uncoated portion bundle 411. In an embodiment, for example, a size of the front surface member 51 may be formed to be the same as or larger than a size of the front surface 411f of the uncoated portion bundle 411 in the first direction (X axis). In an embodiment, for example, the front surface member 51 may be formed to be the same as or larger than the front surface 411f of the uncoated portion bundle 411 in the third direction (Z axis). Accordingly, the front surface member 51 may increase a contact area with the uncoated portion bundle 411 and reduce electrical resistance. However, in an embodiment, a size of the front surface member 51 may be formed to be smaller than a size of the front surface 411f of the uncoated portion bundle 411 in the third direction (Z axis).

The boss 53 may extend from the front surface member 51 and may be connected to the terminals 31 and 32. The boss 53 comes into contact with inner surfaces of the terminals 31 and 32. For example, the boss 53 passes through the insulating plates 71 and 72 to come into contact with the inner surfaces of the terminals 31 and 32. In an embodiment, for example, the boss 53 may be electrically connected to the terminals 31 and 32 through welding.

For example, a first boss included in the first current collecting member 50p extends from the first front surface member toward the first cap plate 21. The first boss may pass through the first insulating plate 71 to be connected to the first terminal 31. For example, a second boss included in the second current collecting member 50n extends from the second front surface member toward the second cap plate 22. The second boss may pass through the second insulating plate 72 to be connected to the second terminal 32.

In FIG. 7, a cross-sectional shape of the boss 53 is illustrated as having a circular shape, but the shape of the boss 53 is not limited thereto. For example, the boss 53 may have any of various shapes, such as any of an oval, a polygon, and the like.

For example, the side surface member 52 forms an exterior of another surface of the current collecting member 50.

The side surface member 52 is connected to the front surface member 51 and extends in a different direction from a direction in which the front surface member 51 extends. For example, the side surface member 52 is connected to the front surface member 51 and extends in a direction perpendicular to the front surface member 51. For example, the side surface member 52 extends in the second direction (Y axis) from at least one edge of the front surface member 51. For example, the side surface member 52 extends in a direction in which the uncoated portion n extends.

The side surface member 52 extends while being in contact with at least one of the first surface 4111, the second surface 4112, the third surface 4113, and the fourth surface 4114 of the uncoated portion bundle 411. For example, the side surface member 52 may be formed in a shape so as to be in contact with at least the first, second, third and fourth surfaces 4111, 4112, 4113, and 4114. For example, the side surface member 52 may be formed in a generally rectangular plate shape.

The current collecting member 50 includes one or more side surface members 52. For example, if the current collecting member 50 includes one front surface member 51 and one side surface member 52, the current collecting member 50 may cover two surfaces of the uncoated portion bundle 411. For example, if the current collecting member 50 includes one front surface member 51 and two side surface members 52, the current collecting member 50 may cover three surfaces of the uncoated portion bundle 411. For example, if the current collecting member 50 includes one front surface member 51 and three or more side surface members 52, the current collecting member 50 may cover at least four surfaces of the uncoated portion bundle 411.

FIG. 7 illustrates an example in which the current collecting member 50 includes one front surface member 51 and two side surface members 521 and 522. However, a shape and/or application state of the current collecting member 50 are not limited thereto.

Through such a structure, the current collecting member 50 may be connected to the uncoated portion bundle 411 over a large area. In an embodiment, the current collecting member 50 may be connected to the uncoated portion bundle 411 without a process of pressing the uncoated portion n, and a defect rate of manufacturing the secondary battery 1 may be reduced and reliability of the secondary battery 1 may be improved.

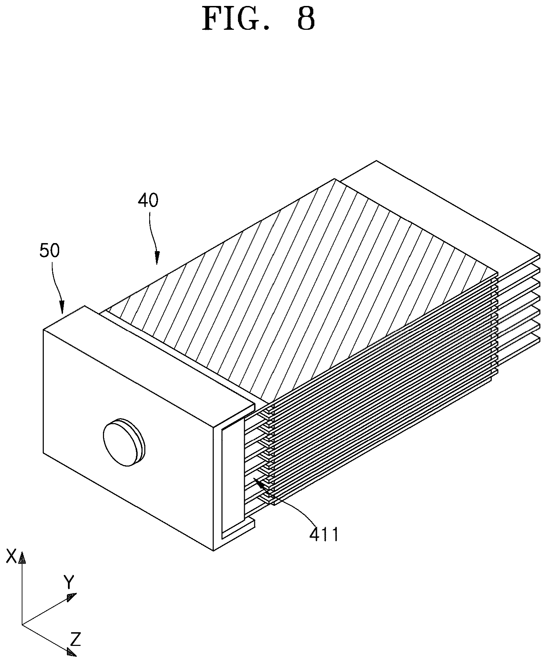

FIG. 8 is a view schematically illustrating an example in which a current collecting member according to an embodiment of the present invention is mounted on an electrode assembly.

A secondary battery 1 (e.g., the secondary battery 1 described with respect to FIGS. 1 to 7) according to an embodiment of the present invention includes: an electrode assembly 40 (e.g., the electrode assembly 40 described with respect to FIGS. 1 to 7) including an uncoated portion bundle 411; and a current collecting member 50 (e.g., the current collecting member 50 described with respect to FIGS. 3 to 7) connected to the uncoated portion bundle 411 while covering at least two surfaces of the uncoated portion bundle 411, the electrode assembly 40 is formed by stacking a plurality of electrodes 41 each including a mixture portion a formed to have a first width w1 and an uncoated portion n formed to have a second width w2 equal to the first width w1 and extending from the mixture portion a, and the uncoated portion bundle 411 is formed by stacking a plurality of uncoated portions n.

The current collecting member 50 is connected to the electrode assembly 40 by being connected to the uncoated portion bundle 411. The current collecting member 50 electrically connects the electrode assembly 40 and the terminals 31 and 32.

For example, the current collecting member 50 includes: a first current collecting member 50p located on a side of the electrode assembly 40 and connected to a first uncoated portion bundle 411p; and a second current collecting member 50n located on another side of the electrode assembly 40 and connected to a second uncoated portion bundle 411n.

For example, the first current collecting member 50p is located between the first uncoated portion bundle 411p and the first cap plate 21. The first current collecting member 50p may electrically connect the first terminal 31 and the first electrode 41p.

For example, the second current collecting member 50n is located between the second uncoated portion bundle 411n and the second cap plate 22. The second current collecting member 50n may electrically connect the second terminal 32 and the second electrode 41n.

For example, as shown in FIG. 8, the uncoated portion bundle 411 is disposed to be inserted into the current collecting member 50. Accordingly, the current collecting member 50 may be coupled to the uncoated portion bundle 411. Further, the current collecting member 50 may be fixed to the electrode assembly 40.

The current collecting member 50 may be in contact with the uncoated portion bundle 411 while covering at least two surfaces of the uncoated portion bundle 411. In an embodiment, for example, the current collecting member 50 includes a front surface member 51 in contact with the front surface 411f of the uncoated portion bundle 411, and a side surface member 52 in contact with at least one of the first to fourth surfaces 4111 to 4114 of the uncoated portion bundle 411. Accordingly, the current collecting member 50 may be connected to the uncoated portion bundle 411 even if the uncoated portion n is not separately pressed.

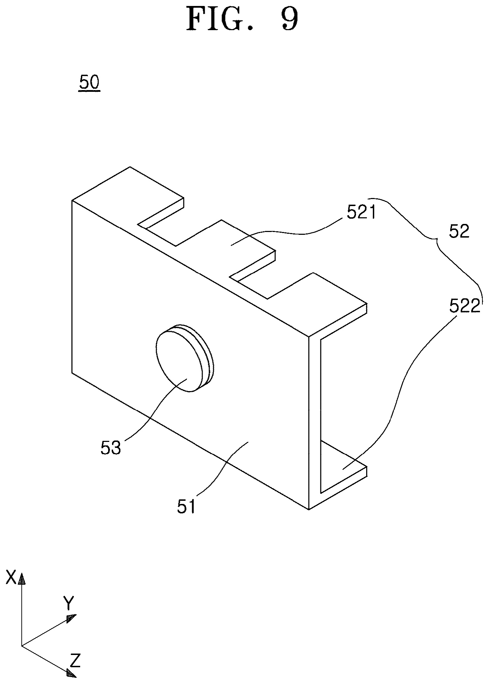

In an embodiment, for example, the current collecting member 50 may be formed in a C shape when the current collecting member 50 is viewed in the third direction (Z axis). The uncoated portion bundle 411 may be inserted into the concave portion in the C shape and connected to the current collecting member 50. However, a manner in which the electrode assembly 40 and the current collecting member 50 are coupled is not limited thereto, and an example of a shape of the current collecting member 50 will be described in further detail below with respect to FIG. 9.

For example, the current collecting member 50 is positioned so as not to overlap the separator 42 in the direction in which the electrodes 41 are stacked. In an embodiment, the electrode 41 is stacked in the first direction (X axis), and the current collecting member 50 is disposed so as not to overlap the separator 42 in the first direction (X axis).

For example, in the first direction (X axis), the current collecting member 50 includes the side surface member 52 overlapping the uncoated portion bundle 411. In this case, in the first direction (X axis), the side surface member 52 may overlap the uncoated portion bundle 411, but may not overlap the separator 42. Accordingly, the current collecting member 50 may prevent or substantially prevent the separator 42 from being damaged in a process of being connected to the uncoated portion n.

As described above, the secondary battery 1 according to an embodiment of the present invention includes: the uncoated portion bundle 411 formed by stacking the uncoated portions n that are unnotched; and the current collecting member 50 that may be connected to the uncoated portion bundle 411 over a large area. Accordingly, in one or more embodiments of the present invention, a secondary battery 1 can reduce electrical resistance due to a flow of electrons and improve a defect problem caused by non-welding between the uncoated portion and the current collecting member.

FIG. 9 is a view schematically illustrating a current collecting member according to an embodiment of the present invention.

A secondary battery 1 (e.g., the secondary battery 1 described with respect to FIGS. 1 to 8) according to an embodiment of the present invention includes an electrode assembly 40 (e.g., the electrode assembly 40 described with respect to FIGS. 1 to 8) and a current collecting member 50 (e.g., the current collecting member 50 described with respect to FIGS. 3 to 8).

For example, the current collecting member 50 includes: a front surface member 51 located in the direction in which the uncoated portion n extends and in contact with the front surface, which is an end portion of the uncoated portion bundle 411; and a side surface member 52 connected to the front surface member 51 and extending in a direction perpendicular to the front surface member 51.

For example, the side surface member 52 includes a first member (also referred to as a first side surface member) 521.

For example, the first member 521 is connected to the front surface member 51 and extends in a direction perpendicular to the front surface member 51. For example, the first member 521 extends in the second direction (Y axis). For example, the first member 521 extends parallel to the uncoated portion n.

For example, the first member 521 is positioned to face the first surface 4111 of the uncoated portion bundle 411. For example, the first member 521 is in contact with the first surface 4111. For example, an inner surface of the first member 521 covers at least a portion of the first surface 4111.

Accordingly, when viewed in the third direction (Z axis), the current collecting member 50 may be formed in a ¬ shape. The current collecting member 50 may be coupled to the uncoated portion bundle 411 while covering the front surface 411f and the first surface 4111 of the uncoated portion bundle 411.

For example, the side surface member 52 includes a second member 522 (also referred to as a second side surface member).

For example, the second member 522 is connected to the front surface member 51 and extends in a direction perpendicular to the front surface member 51. For example, the second member 522 extends in the second direction (Y axis). For example, the second member 522 extends parallel to the uncoated portion n.

For example, the second member 522 is positioned to face the second surface 4112 of the uncoated portion bundle 411. For example, the second member 522 is in contact with the second surface 4112. For example, an inner surface of the second member 522 covers at least a portion of the second surface 4112.

Accordingly, when viewed in the third direction (Z axis), the current collecting member 50 may be formed in an L shape. The current collecting member 50 may be coupled to the uncoated portion bundle 411 while covering the front surface 411f and the second surface 4112 of the uncoated portion bundle 411.

For example, the side surface member 52 includes the first member 521 and the second member 522.

For example, the first member 521 may extend in a perpendicular direction from an edge of the front surface member 51. In addition, for example, the second member 522 may extend in a perpendicular direction from an edge on another side of the front surface member 51. In this case, an edge and the another edge of the front surface member 51 may be positioned to be opposite to each other. In addition, the second member 522 may be located in a direction opposite to the first member 521.

Accordingly, as shown in FIGS. 7 and 9, when viewed in the third direction (Z axis), the current collecting member 50 may be formed in a C shape. The current collecting member 50 may be coupled to the uncoated portion bundle 411 while covering the front surface 411f, the first surface 4111, and the second surface 4112 of the uncoated portion bundle 411.

At least one of the first member 521 and the second member 522 may be formed in the form of one or more plates extending from the front surface member 51.

For example, as shown in FIG. 7, each side surface member 52 may be formed in the form of one plate extending from the front surface member 51.

For example, the side surface member 52 may be formed in the form of one rectangular plate. However, the shape of the side surface member 52 is not limited thereto, and the side surface member 52 may have any suitable shape as long as it is in the form of one plate extending from the front surface member 51.

In an embodiment, for example, one edge of the side surface member 52 is connected to one edge of the front surface member 51. In this case, a length of an edge of the side surface member 52 may correspond to (e.g., be equal to) a length of an edge of the front surface member 51. In an embodiment, in the third direction (Z axis), the side surface member 52 may be formed to have a constant width. In an embodiment, in the third direction (Z axis), the side surface member 52 may be formed in the form of a rectangular plate having a width equal to the length of an edge of the front surface member 51.

For example, the first member 521 may be formed in the form of a rectangular plate and extend in a perpendicular direction from an edge of the front surface member 51. For example, the second member 522 may be formed in the form of a rectangular plate and extend in a perpendicular direction from another edge of the front surface member 51. In this case, the edge and the another edge of the front surface member 51 are located in opposite directions in the first direction (X axis).

Accordingly, the current collecting member 50 includes the side surface member 52 formed to have a large area. The current collecting member 50 may be in contact with the uncoated portion bundle 411 over a large area.

For example, as shown in FIG. 9, each side surface member 52 is formed in the form of a plurality of plates extending from the front surface member 51.

For example, the side surface member 52 may be formed in the form of a plurality of rectangular plates. However, a shape of the side surface member 52 is not limited thereto, and the side surface member 52 may have any suitable shape as long as it is in the form of a plurality of plates extending from the front surface member 51.

For example, an edge of the side surface member 52 is connected to an edge of the front surface member 51. In this case, a length of an edge of each side surface member 52 connected with the front surface member 51 may be shorter than that of an edge of the front surface member 51 connected with the corresponding side surface member 52. For example, a plurality of side surface members 52 may be spaced apart from each other and connected to an edge of the front surface member 51.

For example, the first member 521 may be formed in the form of a plurality of rectangular plates spaced apart from each other and may extend in a perpendicular direction from an edge of the front surface member 51. For example, the second member 522 may be formed in the form of a plurality of rectangular plates spaced apart from each other and may extend in a perpendicular direction from another edge of the front surface member 51. In this case, the edge and the another edge of the front surface member 51 are located in opposite directions in the first direction (X axis).

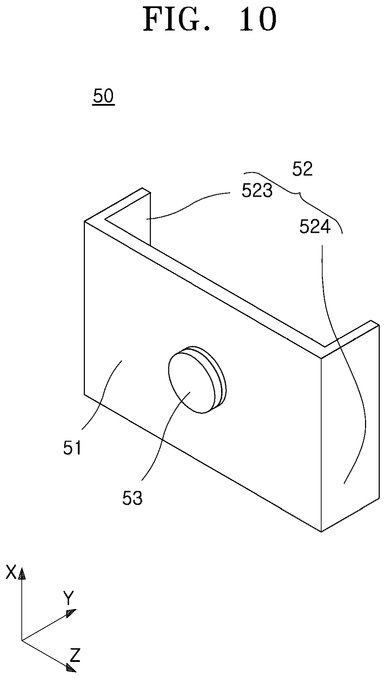

In this case, the number of side surface members 52 connected to an edge of the front surface member 51 may be two or more. For example, as shown in FIG. 10, the first member 521 and the second member 522 may each be formed in the form of three plates. However, a number of side surface members 52 is not limited thereto.

As such, the current collecting member 50 includes a plurality of side surface members 52 formed with a small area. The side surface members 52 may be more easily bent or folded from the front surface member 51. The current collecting member 50 may be brought into close contact with the uncoated portion bundle 411.

FIG. 10 is a view schematically illustrating a current collecting member according to an embodiment of the present invention.

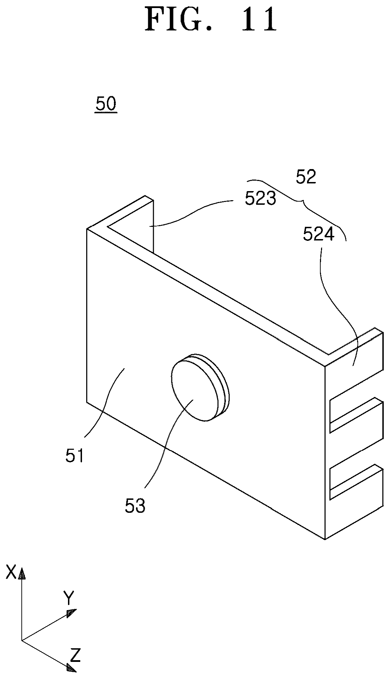

FIG. 11 is a view schematically illustrating a current collecting member according to an embodiment of the present invention.

A secondary battery 1 (e.g., the secondary battery 1 described with respect to FIGS. 1 to 10) according to an embodiment of the present invention includes an electrode assembly 40 (e.g., the electrode assembly 40 described with respect to FIGS. 1 to 10) and a current collecting member 50 (e.g., the current collecting member 50 described with respect to FIGS. 3 to 10).

For example, the current collecting member 50 includes: a front surface member 51 located in the direction in which the uncoated portion n extends and in contact with the front surface, which is an end portion of the uncoated portion bundle 411; and a side surface member 52 connected to the front surface member 51 and extending in a direction perpendicular to the front surface member 51.

For example, the side surface member 52 includes a third member 523 (also referred to as a third side surface member).

For example, the third member 523 is connected to the front surface member 51 and extends in a direction perpendicular to the front surface member 51. For example, the third member 523 extends in the second direction (Y axis).

For example, the third member 523 is positioned to face the third surface 4113 of the uncoated portion bundle 411, which is a stacked surface of the uncoated portions n. For example, the third member 523 is in contact with the third surface 4113. For example, an inner surface of the third member 523 covers at least a portion of the third surface 4113.

Accordingly, when viewed in the first direction (X axis), the current collecting member 50 may be formed in a ¬ shape. The current collecting member 50 may be coupled to the uncoated portion bundle 411 while covering the front surface 411f and the third surface 4113 of the uncoated portion bundle 411.

For example, the side surface member 52 includes a fourth member 524 (also referred to as a fourth side surface member).

For example, the fourth member 524 is connected to the front surface member 51 and extends in a direction perpendicular to the front surface member 51. For example, the fourth member 524 extends in the second direction (Y axis).

For example, the fourth member 524 is positioned to face the fourth surface 4114 of the uncoated portion bundle 411. For example, the fourth member 524 is in contact with the fourth surface 4114. For example, an inner surface of the fourth member 524 covers at least a portion of the fourth surface 4114.

Accordingly, when viewed in the first direction (X axis), the current collecting member 50 may be formed in an L shape. The current collecting member 50 may be coupled to the uncoated portion bundle 411 while covering the front surface 411f and the fourth surface 4114 of the uncoated portion bundle 411.

For example, the side surface member 52 includes the third member 523 and the fourth member 524.

For example, the third member 523 may extend in a perpendicular direction from an edge of the front surface member 51. In addition, for example, the fourth member 524 may extend in a perpendicular direction from an edge on another side of the front surface member 51. In this case, the edge and the another edge of the front surface member 51 may be positioned to be opposite to each other. In addition, the fourth member 524 may be located in a direction opposite to the third member 523.

Accordingly, as shown in FIGS. 10 and 11, when viewed in the first direction (X axis), the current collecting member 50 may be formed in a C shape. The current collecting member 50 may be coupled to the uncoated portion bundle 411 while covering the front surface 411f, the third surface 4113, and the fourth surface 4114 of the uncoated portion bundle 411.

At least one of the third member 523 and the fourth member 524 may be formed in a form of one or more plate extending from the front surface member 51.

For example, as shown in FIG. 10, each side surface member 52 is formed in a form of one plate extending from the front surface member 51.

For example, the side surface member 52 may be formed in a form of one rectangular plate. However, a shape of the side surface member 52 is not limited thereto, and the side surface member 52 may have any suitable shape as long as it is in the form of a plate extending from the front surface member 51.

In an embodiment, for example, an edge of the side surface member 52 is connected to an edge of the front surface member 51. In this case, a length of an edge of the side surface member 52 may correspond to (e.g., be equal to) a length of an edge of the front surface member 51. In an embodiment, in the first direction (X axis), the side surface member 52 may be formed to have a constant width. In the first direction (X axis), the side surface member 52 may be formed in the form of a rectangular plate having a width equal to the length of one edge of the front surface member 51.

For example, the third member 523 may be formed in the form of a rectangular plate and extend in a perpendicular direction from an edge of the front surface member 51. For example, the fourth member 524 may be formed in the form of a rectangular plate and extend in a perpendicular direction from another edge of the front surface member 51. In this case, the edge and the another edge of the front surface member 51are located in opposite directions in the third direction (Z axis).

Accordingly, the current collecting member 50 includes the side surface member 52 formed to have a large area. The current collecting member 50 may be in contact with the uncoated portion bundle 411 over a large area.

In an embodiment, for example, as shown in FIG. 11, each side surface member 52 is formed in the form of a plurality of plates extending from the front surface member 51.

For example, the side surface member 52 may be formed in the form of a plurality of rectangular plates. However, a shape of the side surface member 52 is not limited thereto, and the side surface member 52 may have any suitable shape as long as it is in the form of a plurality of plates extending from the front surface member 51.

For example, an edge of the side surface member 52 is connected to an edge of the front surface member 51. In this case, a length of an edge of each side surface member 52 connected with the front surface member 51 may be shorter than that of one edge of the front surface member 51 connected with the corresponding side surface member 52. For example, a plurality of side surface members 52 may be spaced apart from each other and connected to an edge of the front surface member 51.

For example, the third member 523 may be formed in the form of a plurality of rectangular plates spaced apart from each other and may extend in a perpendicular direction from an edge of the front surface member 51. For example, the fourth member 524 may be formed in the form of a plurality of rectangular plates spaced apart from each other and may extend in a perpendicular direction from another edge of the front surface member 51. In this case, the edge and the another edge of the front surface member 51are located in opposite directions in the third direction (Z axis).

In an embodiment, a number of side surface members 52 connected to an edge of the front surface member 51 may be two or more. For example, as shown in FIG. 11, the third member 523 and the fourth member 524 may each be formed in the form of three plates. However, the number of side surface members 52 is not limited thereto.

As such, the current collecting member 50 includes a plurality of side surface members 52 formed with a small area. The side surface member 52 may be more easily bent or folded from the front surface member 51. The current collecting member 50 may be brought into close contact with the uncoated portion bundle 411.

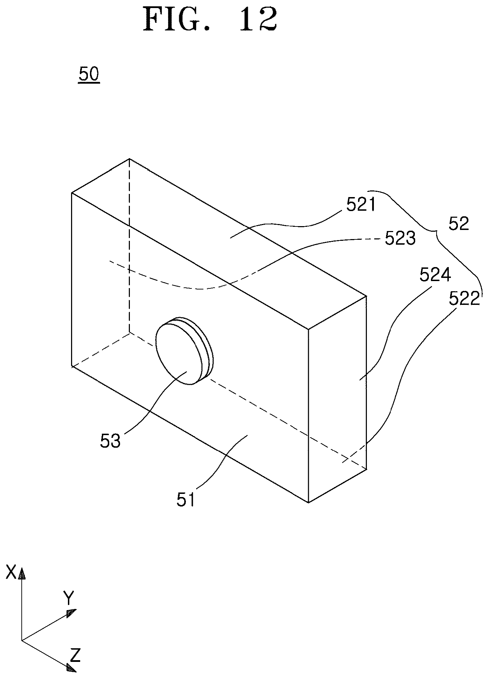

FIG. 12 is a view schematically illustrating a current collecting member according to an embodiment of the present invention;

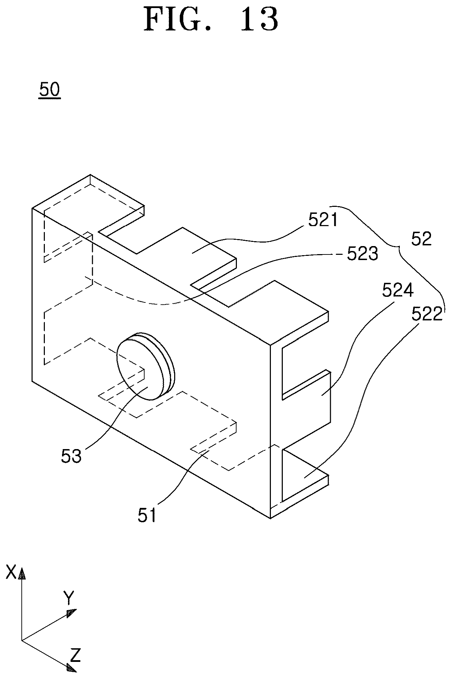

FIG. 13 is a view schematically illustrating a current collecting member according to an embodiment of the present invention;

A secondary battery 1 (e.g., the secondary battery 1 described with respect to FIGS. 1 to 12) according to an embodiment of the present invention includes an electrode assembly 40 (e.g., the electrode assembly 40 described with respect to FIGS. 1 to 12) and a current collecting member 50 (e.g., the current collecting member 50 described with respect to FIGS. 3 to 12).

For example, the current collecting member 50 includes: a front surface member 51 located in a direction in which the uncoated portion n extends and in contact with the front surface, which is an end portion of the uncoated portion bundle 411; and a side surface member 52 connected to the front surface member 51 and extending in a direction perpendicular to the front surface member 51.

For example, the side surface member 52includes: a first member (also referred to as a first side surface member) 521 that is connected to the front surface member 51, extends in a direction perpendicular to the front surface member 51, extends parallel to the uncoated portion 411 and in contact with the first surface 4111 of the uncoated portion bundle 411; a second member (also referred to as a second side surface member) 522 that is connected to the front surface member 51, extends in a direction perpendicular to the front surface member 51, and in contact with the second surface 4112 located in the direction opposite to the first surface 4111; a third member (also referred to as a third side surface member) 523 that is connected to the front surface member 51, extends in a direction perpendicular to the front surface member 51, and in contact with the third surface 4113 of the uncoated portion bundle 411, which is a stacked surface of the uncoated portions n; and a fourth member (also referred to as a fourth side surface member) 524 that is connected to the front surface member 51, extends in a direction perpendicular to the front surface member 51 and in contact with the fourth surface 4114 located in the direction opposite to the third surface 4113.

For example, the third surface 4113 is located adjacent to each of the first surface 4111 and the second surface 4112. For example, the fourth surface 4114 is located adjacent to each of the first surface 4111 and the second surface 4112.

Accordingly, as shown in FIGS. 12 and 13, the current collecting member 50 may be formed in a □ shape or a □ shape formed by dotted lines when viewed in the second direction (Y axis). The current collecting member 50 may be coupled to the uncoated portion bundle 411 while covering the front surface 411f, the first surface 4111, the second surface 4112, the third surface 4113, and the fourth surface 4114 of the uncoated portion bundle 411.

At least one of the first member 521 to the fourth member 524 may be formed in the form of one or more plates extending from the front surface member 51.

For example, as shown in FIG. 12, each side surface member 52 is formed in the form of one plate extending from the front surface member 51. The description of the side surface member 52 formed in the form of one plate may be the same as or similar to that described with reference to FIGS. 7 and 9 to 11. In an embodiment, the current collecting member 50 includes the side surface member 52 formed to have as large an area as possible. The current collecting member 50 may be in contact with the uncoated portion bundle 411 over a larger area.

For example, as shown in FIG. 13, each side surface member 52 is formed in the form of a plurality of plates extending from the front surface member 51. The description of the side surface member 52 formed in the form of a plurality of plates may be the same as or similar to that described with reference to FIGS. 7 and 9 to 11. In an embodiment, the current collecting member 50 includes the plurality of side surface members 52 formed with as small an area as possible. The side surface members 52 may be more easily bent or folded from the front surface member 51. The current collecting member 50 may be brought into closer contact with the uncoated portion bundle 411.

Various shapes of the current collecting member 50 have been described with reference to FIGS. 7 and 9 to 13. However, the embodiments shown in FIGS. 9 to 14 are merely some examples of the current collecting member 50. As described above, the shape of the current collecting member 50 may be applied in addition to those shown in FIGS. 9 to 14. Herein, a method in which the current collecting member 50 is disposed with respect to the electrode assembly 40 will be described with respect to some examples.

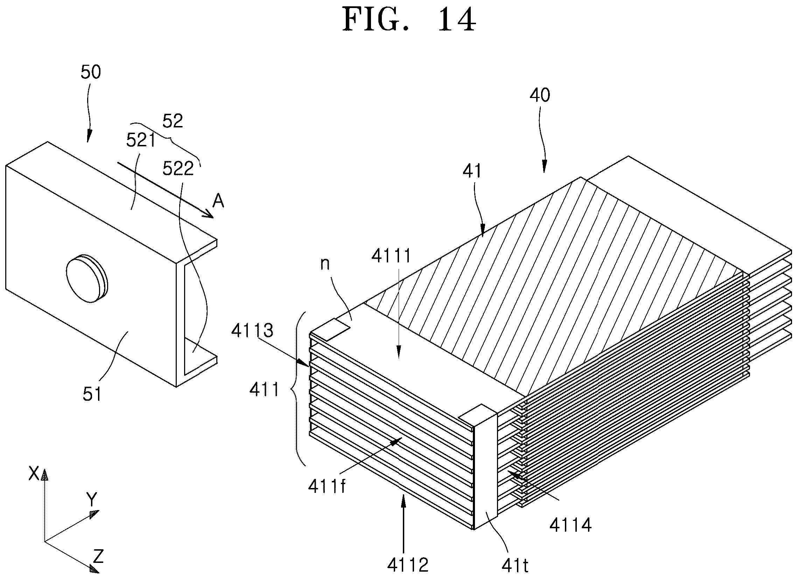

FIG. 14 is a view schematically illustrating an example in which a current collecting member according to an embodiment of the present invention is mounted on an electrode assembly.

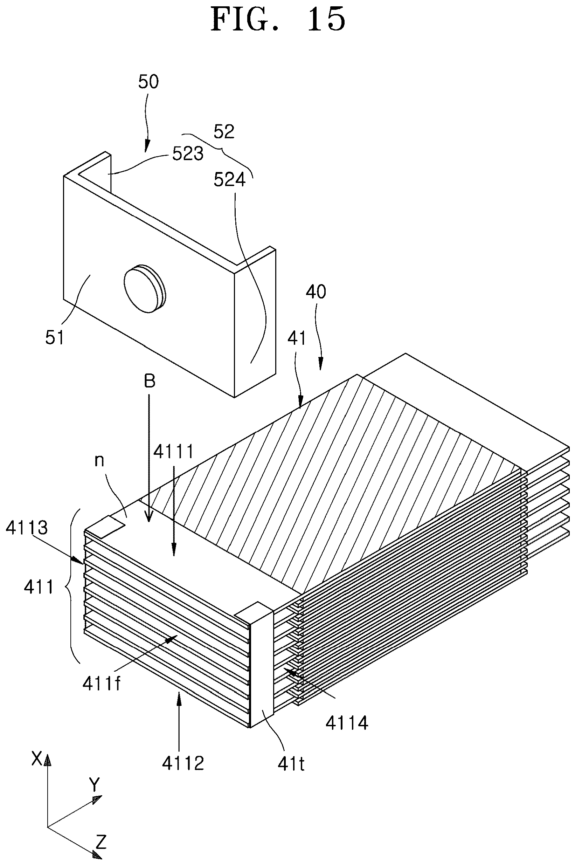

FIG. 15 is a view schematically illustrating an example in which a current collecting member according to an embodiment of the present invention is mounted on an electrode assembly.

A secondary battery 1 (e.g., the secondary battery 1 described with respect to FIGS. 1 to 13) according to an embodiment of the present invention includes an electrode assembly 40 (e.g., the electrode assembly 40 described with respect to FIGS. 1 to 13) and a current collecting member 50 (e.g., the current collecting member 50 described with respect to FIGS. 3 to 13).

The electrode assembly 40 includes an uncoated portion bundle 411. In an embodiment, the current collecting member 50 is coupled to the electrode assembly 40 while covering at least two or more surfaces of the uncoated portion bundle 411. In an embodiment, the current collecting member 50 includes a front surface member 51 in contact with a surface of the uncoated portion bundle 411, and a side surface member 52 in contact with at least one surface of the uncoated portion bundle 411.

For example, the side surface member 52 extends away from the front surface 411f parallel to the XZ plane. In addition, the side surface member 52 includes at least one of a first member 521, a second member 522, a third member 523, and a fourth member 524. In an embodiment, for example, the side surface member 52 may not include the first member 521 and/or the second member 522 located in the first direction (X axis). In this case, the side surface member 52 may be expressed as being open in the first direction (X axis). In an embodiment, for example, the side surface member 52 may not include the third member 523 and/or the fourth member 524 located in the third direction (Z axis). In this case, the side surface member 52 may be expressed as being open in the third direction (Z axis).

In an embodiment, the current collecting member 50 may be fixed to the electrode assembly 40 by sliding.

In an embodiment, for example, the current collecting member 50 is disposed spaced apart from the uncoated portion bundle 411 in order to be coupled to the uncoated portion bundle 411.

In an embodiment, for example, the current collecting member 50 is disposed such that the extended surface of the front surface 411f of the uncoated portion bundle 411 and the extended surface of the front surface member 51 are parallel. The front surface member 51 may be disposed on a surface in which the front surface 411f extends in consideration of a direction in which the side surface member 52 is open. In an embodiment, for example, the side surface member 52 is open in the third direction (the Z axis). In this case, the front surface member 51 may be disposed on a surface in which the front surface 411f extends in the third direction (Z axis). In an embodiment, for example, the side surface member 52 is open in the first direction (the X axis). In this case, the front surface member 51 may be disposed on a surface in which the front surface 411f extends in the first direction (X axis).

For example, the current collecting member 50 is slidable toward the uncoated portion bundle 411 such that the front surface member 51 and the front surface 411f face each other. For example, the front surface member 51 may come into contact with the front surface 411f. As the front surface member 51 and the front surface 411f face each other, the side surface member 52 and at least one of the first surface 4111 to fourth surface 4114 is disposed to face each other.

Accordingly, the current collecting member 50 may be easily coupled to the uncoated portion bundle 411 while covering at least two or more surfaces of the uncoated portion bundle 411.

In an embodiment, for example, as shown in FIG. 14, the side surface member 52 includes the first member 521 and the second member 522. For example, the side surface member 52 does not include the third member 523 and/or the fourth member 524 and thus may be open in the third direction (Z axis). In an embodiment, for example, the side surface member 52 may include the third member 523 and/or the fourth member 524 extending in the same direction as the direction in which the front surface member 51 extends, and thus may be open in the third direction (Z axis).

For example, the current collecting member 50 may be disposed such that the front surface member 51 is located on a surface in which the front surface 411f extends in the third direction (Z axis). The current collecting member 50 is slidable (movable) toward the uncoated portion bundle 411 in the third direction (Z axis). For example, the current collecting member 50 may be slid in direction A of FIG. 15 and coupled to the uncoated portion bundle 411.

In an embodiment, for example, as shown in FIG. 15, the side surface member 52 includes the third member 523 and the fourth member 524. For example, the side surface member 52 does not include the first member 521 and/or the second member 522 and thus may be open in the first direction (X axis). In an embodiment, for example, the side surface member 52 may include the first member and/or the second member 522 extending in the same direction as the direction in which the front surface member 51 extends, and thus may be open in the first direction (X axis).

For example, the current collecting member 50 may be disposed such that the front surface member 51 is located on a surface in which the front surface 411f extends in the first direction (X axis). The current collecting member 50 is slidable (movable) toward the uncoated portion bundle 411 in the first direction (X axis). For example, the current collecting member 50 may be slid in direction B of FIG. 15 and coupled to the uncoated portion bundle 411.

Through such a method, the current collecting member 50 may be easily coupled to the electrode assembly 40. For example, the current collecting member 50 may be slid toward the electrode assembly 40 in various directions and coupled to the electrode assembly 40.

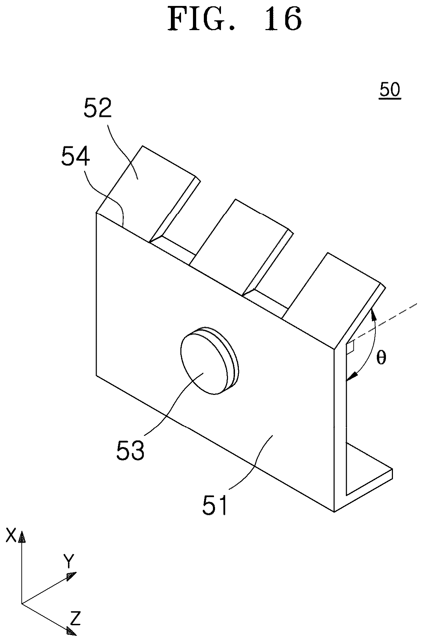

FIG. 16 is a perspective view schematically illustrating a current collecting member according to an embodiment of the present invention.

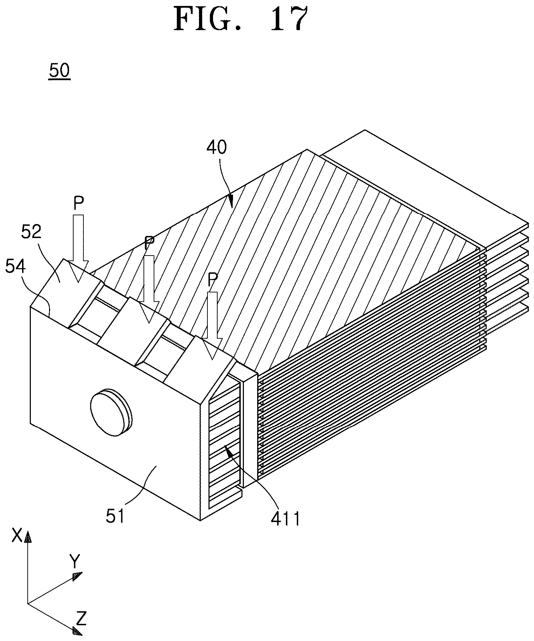

FIG. 17 is a view schematically illustrating an example in which the current collecting member of FIG. 16 is disposed on an electrode assembly according to an embodiment of the present invention.

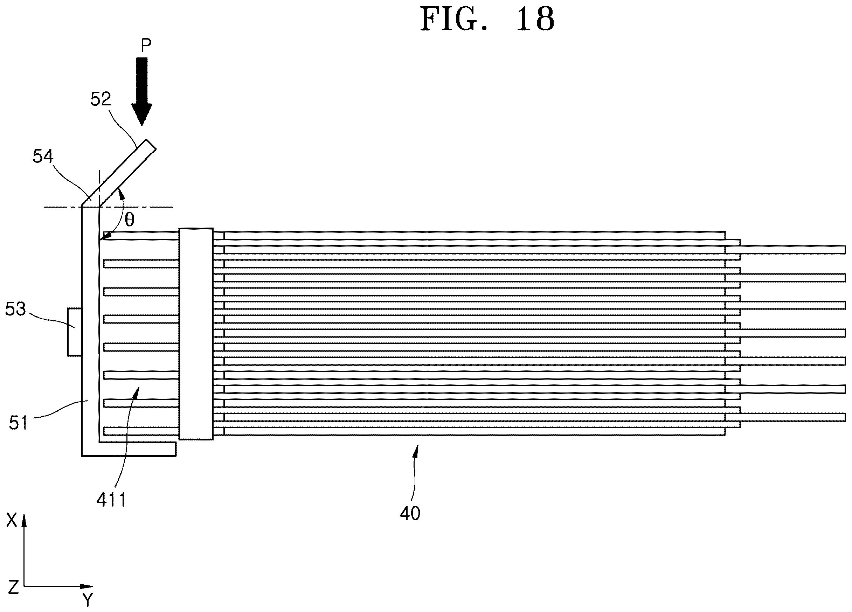

FIG. 18 is a view schematically illustrating an example in which the current collecting member of FIG. 16 is disposed on the electrode assembly according to an embodiment of the present invention.

A secondary battery 1 (e.g., the secondary battery 1 described with respect to FIGS. 1 to 16) according to an embodiment of the present invention includes an electrode assembly 40 (e.g., the electrode assembly 40 described with respect to FIGS. 1 to 16) and a current collecting member 50 (e.g., the current collecting member 50 described with respect to FIGS. 3 to 16).

The side surface member 52 extends in a different direction from the current collecting member 50. For example, the side surface member 52 extends in a perpendicular direction from the current collecting member 50.

The current collecting member 50 may be formed by injection molding such that the side surface member 52 extends in a direction perpendicular to the front surface member 51. As described in FIGS. 14 and 15, the current collecting member 50 may be coupled to the electrode assembly 40 by sliding.

In an embodiment, the current collecting member 50 may be formed by injection molding such that the side surface member 52 extends while forming an obtuse angle with the front surface member 51. In FIG. 16, an angle θ represents an angle between the side surface member 52 and the front surface member 51. In an embodiment, the angle θ between the side surface member 52 and the front surface member 51 forms an obtuse angle, such that θ is greater than 90°. For example, the angle θ between the side surface member 52 and the front surface member 51 may be greater than 90° and less than 180°. FIG. 16 shows an example in which the side surface member 52 forms an obtuse angle with the front surface member 51.

In an embodiment, for example, the side surface member 52 may be bent with respect to the front surface member 51 so as to extend in a direction perpendicular to the front surface member 51. For example, the side surface member 52 may be bent in the direction perpendicular to the front surface member 51 under pressure. As described in FIGS. 14 and 15, the current collecting member 50 in which the side surface member 52 is bent may be coupled to the electrode assembly 40 by sliding.

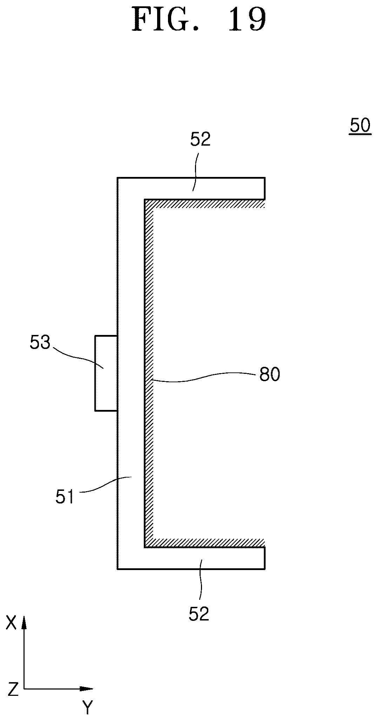

In an embodiment, for example, as shown in FIGS. 18 and 19, the front surface member 51 is disposed to face the front surface 411f. For example, the front surface member 51 is disposed to be in contact with the front surface 411f. In an embodiment, while the current collecting member 50 is moved to the uncoated portion bundle 411, the side surface member 52 may be bent toward the uncoated portion bundle 411. For example, the side surface member 52 may be rolled and bent while receiving a force toward the uncoated portion bundle 411 (e.g., while receiving a force in the P direction). Accordingly, the side surface member 52 may be formed to have an angle θ of about 90° with the front surface member 51. Accordingly, the current collecting member 50 may be coupled to the electrode assembly 40.

In an embodiment, for example, the current collecting member 50 includes a bent portion 54 in which a groove is formed at the boundary between the front surface member 51 and the side surface member 52. For example, the bent portion 54 includes a bent portion 54 formed in a V shape. The side surface member 52 may be more easily bent relative to the front surface member 51 through the bent portion 54.

However, a shape of the bent portion 54 is not limited thereto. The bent portion 54 may be formed in any suitable shape that facilitates the side surface member 52 to extend in different directions relative to the front surface member 51. The bent portion 54 may be formed as a groove of any of various shapes, such as a U shape. Further, the bent portion 54 may be formed to have a thinner thickness by rolling or may be formed of different materials that are easily bent in part.

In an embodiment, the bent portion 54 may be formed between the front surface member 51 and all the side surface members 52. In an embodiment, the bent portion 54 may be formed only in a portion between the front surface member 51 and the side surface member 52.

In an embodiment, for example, the side surface member 52 includes a first member 521 and a second member 522. In this case, for example, the bent portion 54 is formed at the boundary between the front surface member 51 and at least one of the first member 521 and the second member 522.

In an embodiment, for example, the side surface member 52 includes a third member 523 and a fourth member 524. In this case, for example, the bent portion 54 is formed at the boundary between the front surface member 51 and at least one of the third member 523 and the fourth member 524.

In an embodiment, for example, the side surface member 52 includes a first member 521, a second member 522, a third member 523, and a fourth member 524. In this case, for example, the bent portion 54 is formed at a boundary between the front surface member 51 and at least one of the first member 521, the second member 522, the third member 523, and the fourth member 524.

In this way, the current collecting member 50 may be brought into close contact with the uncoated portion bundle 411 through rolling.

FIG. 19 is a view schematically illustrating an example in which a coating member is applied on a current collecting member according to an embodiment of the present invention.

A secondary battery 1 (e.g., the secondary battery 1 described with respect to FIGS. 1 to 19) according to an embodiment of the present invention includes an electrode assembly 40 (e.g., the electrode assembly 40 described with respect to FIGS. 1 to 19) and a current collecting member 50 (e.g., the current collecting member 50 described with respect to FIGS. 3 to 19).

In FIGS. 14 to 18, various examples of how the current collecting member 50 may be coupled to the electrode assembly 40 have been described. In FIG. 19, methods of making such coupling easier and/or more robust will be described.

For example, as shown in FIG. 19, the secondary battery 1 further includes a coating member 80 that is applied on the current collecting member 50 to reduce friction between the current collecting member 50 and the uncoated portion bundle 411.

The coating member 80 may reduce friction between the current collecting member 50 and the uncoated portion bundle 411 and/or improve wear resistance. Accordingly, the coating member 80 allows the current collecting member 50 to move more smoothly relative to the uncoated portion bundle 411. Additionally, the coating member 80 minimizes or reduces damage to the uncoated portion bundle 411 during a process of disposing the current collecting member 50 on the uncoated portion bundle 411.

An inner surface of the current collecting member 50 is coated with the coating member 80. For example, a side of the current collecting member 50 facing the uncoated portion bundle 411 is coated with the coating member 80. In an embodiment, for example, as shown in FIG. 19, an entire inner surface of the current collecting member 50 may be coated with the coating member 80. In an embodiment, for example, a portion of the inner surface of the current collecting member 50 may be coated with the coating member 80. In an embodiment, the front surface member 51 or the side surface member 52 may be coated with the coating member 80. In an embodiment, a portion of each of the front surface member 51 and the side surface member 52 may be coated with the coating member 80.

In an embodiment, the inner surface of the current collecting member 50 may be coated by applying the coating member 80. However, a method of coating the coating member 80 on the current collecting member 50 is not limited thereto, and, for example, the coating member 80 may be formed in the form of a tape and attached to the inner surface of the current collecting member 50.

In an embodiment, for example, the coating member 80 includes a low friction material. In an embodiment, for example, the low friction material includes at least one selected from the group consisting of ethylene-chlorotrifluoroethylene (E-CTFE), PEEK-mod, polytetrafluoroethylene (PTFE), polyimide (PI), polyoxymethylene homopolymer (POM-H), silicone polymers, and combinations thereof.

In an embodiment, for example, the coating member 80 includes a material having wear resistance. In an embodiment, for example, the wear-resistant material includes at least one selected from the group consisting of carbon-based materials, graphite-based materials, molybdenum sulfide, glass fiber, carbon fiber, and combinations thereof.

In an embodiment, for example, the coating member 80 includes a conductive material. The conductive material is an electrically conductive material, and includes, for example, a conductive polymer. The conductive polymer is an electrically conductive polymer, and includes, for example, an organic polymer. The conductive polymer may have electrical conductivity, like metal. In an embodiment, the conductive polymer may have the same characteristics as, for example, a semiconductor.

For example, the conductive polymer may include at least one selected from the group consisting of a polythiophene-based conductive polymer, polypyrrole, polyphenylene, polyaniline, polyacetylene, polysulfonitrile, and a combination of at least two thereof. For example, the polythiophene-based conductive polymers may include polyethylene dioxythiophene (PEDT), polyethylene dioxythiophene/polycellulose sulfonate (PEDOT/PCS), and the like.

Accordingly, the coating member 80 may improve the wear resistance and friction between the current collecting member 50 and the uncoated portion bundle 411 without insulating between the current collecting member 50 and the uncoated portion bundle 411.

In an embodiment, the coating member 80 may include a material in which at least two or more of a low friction material, a wear-resistant material, and a conductive polymer are mixed.

In an embodiment, unlike FIG. 19, the coating member 80 may be formed on the uncoated portion bundle 411 instead of the current collecting member 50. In an embodiment, the coating member 80 may be formed on a side of the uncoated portion bundle 411 facing the current collecting member 50.

Although not illustrated, for example, the secondary battery 1 may further include an adhesive member that is on the current collecting member 50 (e.g., applied to the current collecting member 50) and bonds the current collecting member 50 and the uncoated portion bundle 411.

The adhesive member allows the current collecting member 50 to be more firmly fixed to the uncoated portion bundle 411. The inner surface of the current collecting member 50 may be coated with the adhesive member. For example, the side of the current collecting member 50 facing the uncoated portion bundle 411 is coated with the adhesive member. In an embodiment, for example, an entire inner surface of the current collecting member 50 may be coated with the adhesive member. In an embodiment, for example, a portion of the inner surface of the current collecting member 50 may be coated with the adhesive member. In an embodiment, the front surface member 51 or the side surface member 52 may be coated with the adhesive member. In an embodiment, a portion of each of the front surface member 51 and/or the side surface member 52 may be coated with the adhesive member.

In an embodiment, the inner surface of the current collecting member 50 may be coated by applying the adhesive member. However, a method of coating the adhesive member on the current collecting member 50 is not limited thereto, and, for example, the adhesive member may be formed in the form of a tape and attached to the inner surface of the current collecting member 50.

For example, the adhesive member includes an adhesive material. In an embodiment, for example, the adhesive member may be formed by mixing an adhesive material and a conductive material.

For example, the adhesive material may include at least one of a silicone resin, an acrylic resin, a urethane-based resin, a rubber-based resin, an epoxy resin, a polyolefin, and combinations thereof.

For example, the acrylic resin may include any of an acryl, an ester copolymer, ethyl acrylate, butyl acrylate, hexyl acrylate, n-octyl acrylate, isooctyl acrylate, 2-ethylhexyl acrylate, isononyl acrylate, lauryl acrylate, acrylic acid, maleic acid, fumaric acid, itaconic acid, kryptonic acid, acrylamide, N-vinyl pyrrolidone, N-vinyl caprolactam, acrylonitrile, acryloyl corpoline, 2-hydroxyethyl acrylate, 2-hydroxypropyl acrylate, 2-hydroxybutyl acrylate, and the like.

For example, the urethane-based resin may include polyurethane and the like.

For example, the rubber-based resin may include natural rubber, synthetic rubber, and the like.

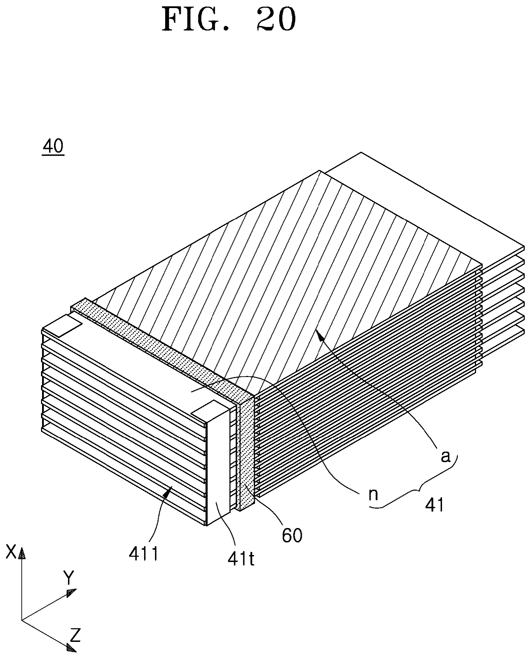

FIG. 20 is a view schematically illustrating an electrode assembly provided with an insulating member according to an embodiment of the present invention.

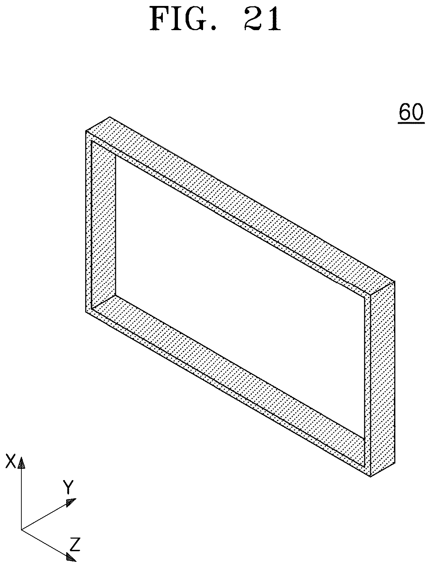

FIG. 21 is a perspective view schematically illustrating an insulating member according to an embodiment of the present invention.

A secondary battery 1 (e.g., the secondary battery 1 described with respect to FIGS. 1 to 20) according to an embodiment of the present invention includes an electrode assembly 40 (e.g., the electrode assembly 40 described with respect to FIGS. 1 to 20) and a current collecting member 50 (e.g., the current collecting member 50 described with respect to FIGS. 3 to 20).

For example, the secondary battery 1 further includes an insulating member 60 that is provided at the boundary between the mixture portion a and the uncoated portion n while surrounding the uncoated portion bundle 411 and includes an insulating material.

In an embodiment, the insulating member 60 is formed to surround at least a portion of the uncoated portion bundle 411. In an embodiment, for example, the insulating member 60 is formed to surround a region where the boundary between the mixture portion a and the uncoated portion n is formed in the uncoated portion bundle 411.

When viewed in the first direction (X-axis), the separator 42 may extend beyond the boundary between the mixture portion a and the uncoated portion n toward the uncoated portion n. For example, when viewed in the first direction (X axis), the insulating member 60 is located on the extended separator 42. Accordingly, the insulating member 60 protects the separator 42. For example, the insulating member 60 prevents or substantially prevents the separator 42 from being damaged by the welding heat generated in the process of welding the current collecting member 50 and the uncoated portion bundle 411.

The insulating member 60 includes an insulating material. For example, the insulating material may include at least one selected from the group consisting of polyamide 6 (PA6), polyimide (PI), polysulfone, polyurethane (PU), polyamide (PA), 6,6 nylon, polycarbonate (PC), polytetrafluoroethylene (PTFE), polymethyl methacrylate (PMMA), and polyethylene terephthalate (PET).

The insulating member 60 may be formed in any of various shapes. In addition, the insulating member 60 may include any of various materials depending on the shape.

For example, the insulating member 60 may be formed in the form of insulating paper. In an embodiment, for example, the insulating member 60 may be formed in the form of insulating paper including a polyester series, such as PET, PC, PVC, or the like. In an embodiment, for example, the insulating member 60 may be formed in the form of insulating paper including a cellulose-based fiber sheet. The insulating member 60 may be provided on the uncoated portion bundle 411 to which the adhesive material, such as an acrylic or silicone material, is applied.

In an embodiment, for example, the insulating member 60 may be formed in the form of an insulating tape. For example, the insulating member 60 may be formed in the form of a PTFE tape, PI tape, rubber tape (rubber electrical tape), PVC tape (vinyl electrical tape), acetate fiber tape, epoxy tape, glass fiber tape, polyester tape, filament reinforced tape, or the like. The insulating member 60 may be attached on the uncoated portion bundle 411.

In an embodiment, for example, the insulating member 60 may be formed in the form of an insulating tube. For example, the insulating member 60 may be formed in the form of a tube containing a polymer with excellent impact strength and chemical resistance, such as PEEK, PTFE, PAI, PPS, PI, PEI, PVDF, and PPUS, and/or high heat resistance. The insulating member 60 may be fixed to the uncoated portion bundle 411 while being inserted by the uncoated portion bundle 411.

Accordingly, the insulating member 60 according to an embodiment of the present invention allows the current collecting member 50 to be joined to the electrode assembly 40 without damaging the separator 42.

In an embodiment, the thickness of the insulating member 60 may be 0.02 mm or less. Accordingly, the insulating member 60 may improve the reliability and/or safety of the secondary battery 1 without degrading the capacity of the secondary battery 1.

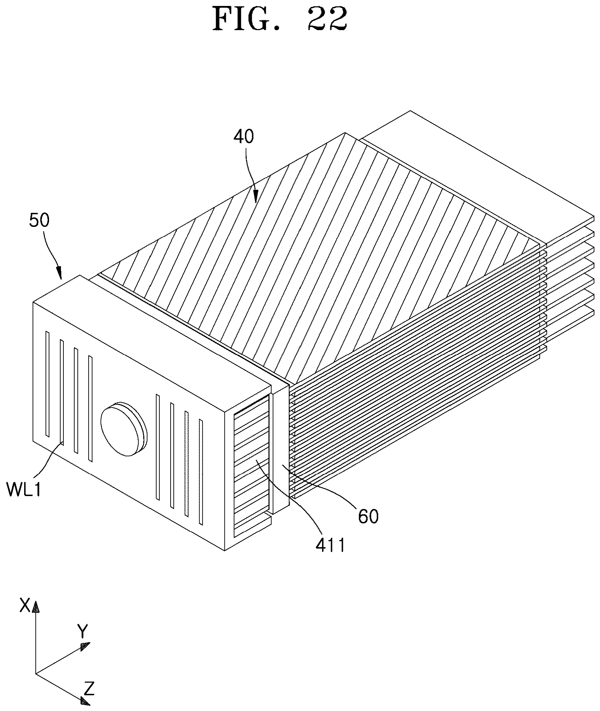

FIG. 22 is a view schematically illustrating an example of a welding line between an uncoated portion and a current collecting member according to an embodiment of the present invention.

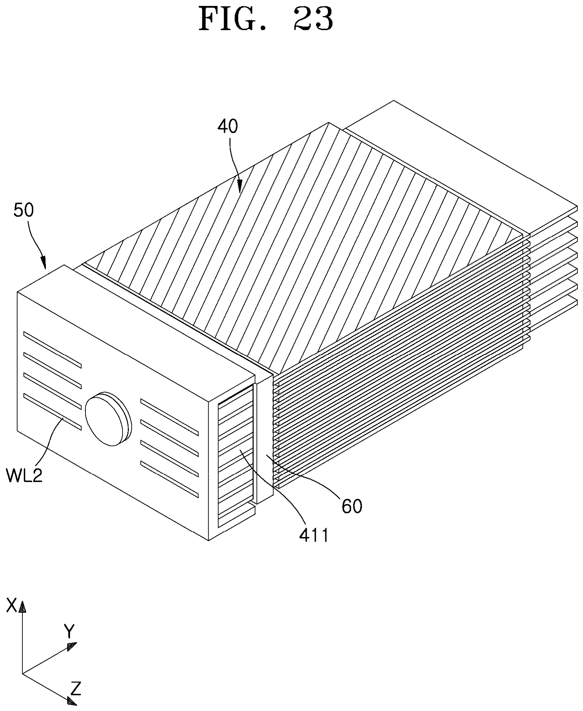

FIG. 23 is a view schematically illustrating an example of a welding line between an uncoated portion and a current collecting member according to an embodiment of the present invention.

A secondary battery 1 (e.g., the secondary battery 1 described with respect to FIGS. 1 to 21) according to an embodiment of the present invention includes an electrode assembly 40 (e.g., the electrode assembly 40 described with respect to FIGS. 1 to 21) and a current collecting member 50 (e.g., the current collecting member 50 described with respect to FIGS. 3 to 21).

The current collecting member 50 may be joined to the uncoated portion bundle 411. In an embodiment, for example, the current collecting member 50 may be joined to the uncoated portion bundle 411 through welding. In an embodiment, for example, the welding method through which the current collecting member 50 and the uncoated portion bundle 411 are joined includes any of laser welding, ultrasonic welding, and PMW welding. Accordingly, the current collecting member 50 and the uncoated portion bundle 411 may be joined by forming a welding line (e.g., WL1 and WL2).

For example, as shown in FIG. 22, the current collecting member 50 includes a first welding line WL1 that connects the front surface member 51 and the uncoated portion bundle 411 and is formed parallel to the stacking direction of the uncoated portions n. In this case, for example, the stacking direction of the uncoated portions n is the first direction (X axis). For example, the first welding line WL1 is formed to extend in the first direction (X axis). For example, the first welding line WL1 is formed in the form of a plurality of lines that extend in the first direction (X axis) and are disposed spaced apart from each other.

For example, as shown in FIG. 23, the current collecting member 50 includes a second welding line WL2 that connects the front surface member 51 and the uncoated portion bundle 411 and is formed perpendicular to the stacking direction of the uncoated portions n. In this case, for example, the stacking direction of the uncoated portions n is the first direction (X axis). For example, the second welding line WL2 is formed in the form of a plurality of lines that extend in the third direction (Z axis) and are disposed spaced apart from each other.

However, a shape of the welding line formed by joining the current collecting member 50 and the uncoated portion bundle 411 is not limited thereto. For example, at least a portion of the welding line may be formed in a single line shape. For example, at least a portion of the welding line may be formed in a double line shape. For example, at least a portion of the welding line may be formed in a triple line shape. For example, the welding line may be formed in any of various shapes such as any of a spiral shape, a curved shape, a zigzag shape, and the like. In an embodiment, the welding line may include a dot shape.

As such, as the current collecting member 50 and the uncoated portion bundle 411 come into contact with each other over a large area, the welding line may be formed in any of various shapes and/or in any of various ways.

Further, as the current collecting member 50 and the uncoated portion bundle 411 are joined, the current collecting member 50 may be rolled toward the uncoated portion bundle 411 concurrently (e.g., simultaneously) and/or sequentially. For example, the current collecting member 50, may be rolled toward the uncoated portion bundle 411 by heat pressing the side surface member 52. Accordingly, the current collecting member 50 may be coupled to the uncoated portion bundle 411 with higher adhesion.

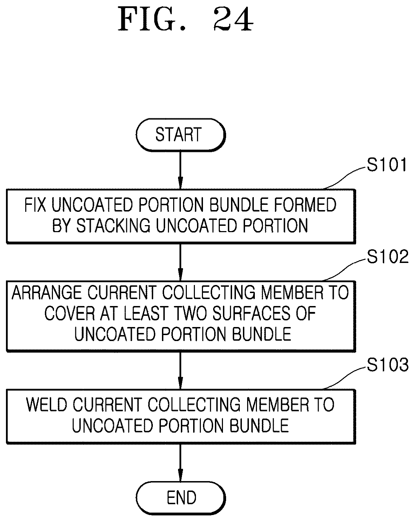

FIG. 24 is a flowchart illustrating a method of manufacturing a secondary battery according to an embodiment of the present invention.

A secondary battery 1 (e.g., the secondary battery 1 described in FIGS. 1 to 23) according to an embodiment of the present invention includes an electrode assembly 40 (e.g., the electrode assembly 40 described in FIGS. 1 to 23) and a current collecting member 50 (e.g., including the current collecting member 50 described in FIGS. 3 to 23). FIG. 24 describes a method of manufacturing the secondary battery 1.

The manufacturing method according to an embodiment of the present invention includes a method of manufacturing a secondary battery 1, which includes an electrode assembly 40 formed by stacking a plurality of electrodes 41 each including a mixture portion a formed to have a first width w1 and an uncoated portion n formed with a second width w2 equal to the first width w1 and extending from the mixture portion a.

As shown in FIG. 24, the manufacturing method according to an embodiment of the present invention includes an operation S101 of fixing an uncoated portion bundle 411 formed by stacking the uncoated portions n. For example, the uncoated portion bundle 411 is formed by stacking the uncoated portions n as electrodes 41 and/or separators 42 are stacked. For example, the uncoated portion bundle 411 may be fixed while each uncoated portion n is neatly arranged. For example, the uncoated portion bundle 411 may be fixed by a tape 41t.

As shown in FIG. 24, the manufacturing method according to an embodiment of the present invention includes an operation S102 of arranging the current collecting member 50 to cover at least two surfaces of the uncoated portion bundle 411.

In an embodiment, for example, as described with respect to FIGS. 14 and 15, the arranging of the current collecting member 50 includes an operation in which the current collecting member 50 is slid onto the uncoated portion bundle 411. In an embodiment, for example, as shown in FIGS. 16 to 18, the arranging of the current collecting member 50 includes an operation in which a bent portion 54 is bent as the current collecting member 50 is rolled to correspond to the shape of the uncoated portion bundle 411.

As shown in FIG. 24, the manufacturing method according to an embodiment of the present invention includes an operation S103 of welding the current collecting member 50 to the uncoated portion bundle 411. For example, the current collecting member 50 may be welded to the uncoated portion bundle 411 by any of various bonding methods, such as any of laser welding, ultrasonic welding, and PMW welding.

As described above, the secondary battery 1 and/or the method of manufacturing the secondary battery 1 according to embodiments of the present invention provide a method of simplifying a process and avoiding a processability problem by using the entire uncoated portion n as a tab without notching the uncoated portion n. In addition, in the secondary battery 1 and/or the method of manufacturing the secondary battery 1, the current collecting member 50 covers at least two surfaces of the uncoated portion bundle 411, thereby increasing a contact area between the uncoated portion n and the current collecting member 50. Accordingly, the secondary battery 1 and/or the method of manufacturing secondary battery 1 may improve the welding rate between the current collecting member 50 and the uncoated portion n and reduce the electrical resistance between the current collecting member 50 and the electrode assembly 40.

According to embodiments of the present invention, a process of manufacturing a secondary battery can be simplified.

According to embodiments of the present invention, a welding rate between an uncoated portion and a current collecting member may be improved.

According to embodiments of the present invention, the electrical resistance between an uncoated portion and a current collecting member may be reduced.

According to embodiments of the present invention, the amount of heat generated by a secondary battery can be reduced.

## Claims

1. A secondary battery (1) comprising:
an electrode assembly (40) comprising a plurality of electrodes (41) that are stacked, the plurality of electrodes (41) each including: a mixture portion having a first width; and an uncoated portion which has a second width equal to the first width and extends from the mixture portion, and a plurality of the uncoated portions (411) are stacked to form an uncoated portion bundle (411); and
a current collecting member (50) which covers at least two surfaces (4111, 4112, 4113, 4114) of the uncoated portion bundle (411) and is connected to the uncoated portion bundle (411).

2. The secondary battery (1) as claimed in claim 1, wherein the current collecting member (50) comprises a front surface member (51) which is located in a direction in which the uncoated portion extends and is in contact with a front surface (411f) which is an end portion of the uncoated portion bundle (411).

3. The secondary battery (1) as claimed in claim 2, wherein the current collecting member (50) further comprises:
a first member (521) connected to the front surface member (51), extending in a direction perpendicular to the front surface member (51), extending parallel to the uncoated portion, and in contact with a first surface (4111) of the uncoated portion bundle (411); and
a second member (522) connected to the front surface member (51), extending in the direction perpendicular to the front surface member (51), and in contact with a second surface (4112) of the uncoated portion bundle (411) located opposite to the first surface (4111).

4. The secondary battery (1) as claimed in claim 3, wherein at least one of the first member (521) and the second member (522) is configured as one or more plates extending from the front surface member (51).

5. The secondary battery (1) as claimed in claim 3, wherein the current collecting member (50) further comprises a bent portion (54) having a groove at a boundary between the front surface member (51) and at least one of the first member (521) and the second member (522).

6. The secondary battery (1) as claimed in claim 2, wherein the current collecting member (50) further comprises:
a third member (523) connected to the front surface member (51), extending in a direction perpendicular to the front surface member (51), and in contact with a third surface (4113) of the uncoated portion bundle (411), which is a stacked surface of the uncoated portion; and
a fourth member (524) connected to the front surface member (51), extending in the direction perpendicular to the front surface member (51), and in contact with a fourth surface (4114) located opposite to the third surface (4113).

7. The secondary battery (1) as claimed in claim 6, wherein at least one of the third member (523) and the fourth member (524) is configured as one or more plates extending from the front surface member (51).

8. The secondary battery (1) as claimed in claim 6, wherein the current collecting member (50) comprises a bent portion (54) having a groove at a boundary between the front surface member (51) and at least one of the third member (523) and the fourth member (524).

9. The secondary battery (1) as claimed in claim 2, wherein the current collecting member (50) further comprises:
a first member (521) connected to the front surface member (51), extending in a direction perpendicular to the front surface member (51), extending parallel to the uncoated portion, and in contact with a first surface (4111) of the uncoated portion bundle (411);
a second member (522) connected to the front surface member (51), extending in the direction perpendicular to the front surface member (51), and in contact with a second surface (4112) of the uncoated portion bundle (411) located opposite to the first surface (4111);
a third member (523) connected to the front surface member (51), extending in the direction perpendicular to the front surface member (51), and in contact with a third surface (4113) of the uncoated portion bundle (411), which is a stacked surface of the uncoated portion; and
a fourth member (524) connected to the front surface member (51), extending in the direction perpendicular to the front surface member (51), and in contact with a fourth surface (4114) of the uncoated portion bundle (411) located opposite to the third surface (4113),
wherein the third surface (4113) is located adjacent to each of the first surface (4111) and the second surface (4112).

10. The secondary battery (1) as claimed in any one of the preceding claims, further comprising:
a coating member (80) on the current collecting member (50) and configured to reduce friction between the current collecting member (50) and the uncoated portion bundle (411),
an adhesive member on the current collecting member (50) and configured to adhere the current collecting member (50) and the uncoated portion bundle (411), and
an insulating member (60) at a boundary between the mixture portion and the uncoated portion while surrounding the uncoated portion bundle (411), and comprising an insulating material.

11. The secondary battery (1) as claimed in any one of the preceding claims, wherein the electrode assembly (40) comprises a first electrode (41p), a second electrode (41n), and a separator (42) between the first electrode (41p) and the second electrode (41n), the first electrode (41p), the second electrode (41n), and the separator (42) being stacked, and
the uncoated portion bundle (411) comprises:
a first uncoated portion bundle (411p) extending from the first electrode (41p) to a first side of the electrode assembly (40); and
a second uncoated portion bundle (411n) extending from the second electrode (41n) to a second side of the electrode assembly (40).

12. The secondary battery (1) as claimed in claim 11, wherein the current collecting member (50) comprises:
a first current collecting member (50p) located at the first side of the electrode assembly (40) and connected to the first uncoated portion bundle (411p); and
a second current collecting member (50n) located at the second side of the electrode assembly (40) and connected to the second uncoated portion bundle (411n).

13. The secondary battery (1) as claimed in claim 11 or 12, wherein in a stacking direction of the first electrode (41p), the second electrode (41n), and the separator (42), the current collecting member (50) is arranged so as not to overlap the separator (42).

14. A method of manufacturing a secondary battery (1) comprising an electrode assembly (40) which is formed by stacking a plurality of electrodes (41) each including: a mixture portion having a first width; and an uncoated portion which has a second width equal to the first width and extends from the mixture portion, the method comprising:
fixing an uncoated portion bundle (411) formed by stacking a plurality of the uncoated portions;
arranging a current collecting member (50) to cover at least two surfaces (4111, 4112, 4113, 4114) of the uncoated portion bundle (411); and
welding the current collecting member (50) to the uncoated portion bundle (411).

15. The method as claimed in claim 14, wherein the arranging of the current collecting member (50) comprises arranging the current collecting member (50) on the uncoated portion bundle (411) by sliding.
